(19) Europäisches Patentamt
European Patent Office
Office européen des brevets

(11) **EP 2 573 734 B1**

(12) **EUROPEAN PATENT SPECIFICATION**

(45) Date of publication and mention
of the grant of the patent:
**24.07.2019 Bulletin 2019/30**

(51) Int Cl.:
**G06T 7/30** *(2017.01)*      **G06T 7/70** *(2017.01)*

(21) Application number: **12184922.8**

(22) Date of filing: **18.09.2012**

(54) **SYSTEMS AND METHODS FOR EVALUATING PLANE SIMILARITY**

SYSTEME UND VERFAHREN ZUR BEWERTUNG PLANARER ÄHNLICHKEIT

SYSTÈMES ET PROCÉDÉS POUR L'ÉVALUATION DE LA RESEMBLANCE PLANAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2011 US 201113242701**

(43) Date of publication of application:
**27.03.2013 Bulletin 2013/13**

(73) Proprietor: **Honeywell International Inc.
Morris Plains, NJ 07950 (US)**

(72) Inventors:
 • **DUNIK, Jindrich**
  **Morris Plains, NJ 07950 (US)**
 • **LUKAS, Jan**
  **Morris Plains, NJ 07950 (US)**

(74) Representative: **Houghton, Mark Phillip
Patent Outsourcing Limited
1 King Street
Bakewell, Derbyshire DE45 1DZ (GB)**

(56) References cited:
  **WO-A2-2005/004052      US-A- 5 638 465**

## Description

### CROSS-REFERENCE TO RELATED APPLICATIONS

This application is related to co-pending United States Patent Application, serial number 12/775,865 (applicant docket number H0024871) entitled "SYSTEM AND METHOD FOR EXTRACTION OF FEATURES FROM A 3-D POINT CLOUD" filed on May 7, 2010.

This application is related to co-pending United States Patent Application, serial number 12/436,224 (applicant docket number H0020938) entitled "SYSTEMS AND METHODS FOR EXTRACTING PLANAR FEATURES, MATCHING THE PLANAR FEATURES, AND ESTIMATING MOTION FROM THE PLANAR FEATURES" filed on May 6, 2009.

This application is related to co-pending United States Patent Application, serial number 12/644,559 (applicant docket number H0023848) entitled "SYSTEMS AND METHODS FOR MATCHING SCENES USING MUTUAL RELATIONS BETWEEN FEATURES" filed on December 22, 2009.

This application is related to co-pending United States Patent Application, serial number 12/846,265 (applicant docket number H0027096) entitled "SYSTEMS AND METHODS FOR PROCESSING EXTRACTED PLANE FEATURES" filed on July 29, 2010.

### BACKGROUND

Electronic sensors and signal processing devices are used to determine the movement and position of other objects or of the electronic sensor. To determine the movement and position, the electronic sensor captures different scans of a real-world scene, where the scans contain common features. The processing device then compares the captured scans to determine the movement that occurred between the capture of the different scans. In certain applications, like safety-critical applications, constraints require that the process of determining and evaluating the movement of electronic sensors or other objects be theoretically justified and assessable.

For the reasons stated above and for other reasons stated below which will become apparent to those skilled in the art upon reading and understanding the specification, there is a need in the art for improved systems and methods for theoretically justified transformation hypotheses.

### SUMMARY

The Embodiments of the present invention provide systems and methods for evaluating plane similarity and will be understood by reading and studying the following specification.

Systems and methods for determining plane similarity are provided. In one embodiment a system comprises a sensor configured to acquire a plurality of frames of data, and a processing unit coupled to the sensor, the processing unit configured to process the plurality of frames of data. The processing unit is further configured to store the plurality of frames of data on at least one memory device, read a first frame of data from the plurality of frames stored on the at least one memory device, and read a second frame of data from the plurality of frames stored on the at least one memory device. Additionally, the processing unit is configured to extract a first plane from the first frame of data, extract a second plane from the second frame of data, and calculate a divergence to measure a similarity between the first plane and the second plane.

The invention is set out in the appended set of claims; the further examples called embodiments in the description are illustrative examples.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a block diagram illustrating a system for matching planes extracted from sensor scans according to one embodiment of the present invention;

Figure 2 is a flow diagram illustrating a process for calculating a plane according to one embodiment of the present invention;

Figure 3A is a flow diagram illustrating a method of calculating a hypothetical plane according to one embodiment of the present invention;

Figure 3B is a flow diagram illustrating a method of calculating a hypothetical plane according to one embodiment of the present invention;

Figure 4 is a flow diagram illustrating a method of refining a plane calculation according to one embodiment of the present invention;

Figure 5A is a flow diagram illustrating a random sample consensus method of refining a plane calculation according to one embodiment of the present invention;

Figure 5B is a flow diagram illustrating a method of determining a set of inliers according to one embodiment of the present invention;

Figure 6 is a flow diagram illustrating a method of determining a transformation hypothesis according to one embodiment of the present invention;

Figure 7 is a flow diagram illustrating a method for evaluating the quality of a transformation hypothesis according to one embodiment of the present invention;

Figure 8 is a flow diagram illustrating a method for refining extracted planes according to one embodiment of the present invention;

Figure 9 is a flow diagram illustrating a method for merging extracted planes according to one embodiment of the present invention;

Figure 10 is a flow diagram illustrating a method illustrating a secondary method for merging extracted planes according to one embodiment of the present invention;

Figure 11 is a flow diagram illustrating a method for filtering and merging planes according to one embodiment of the present invention;

Figure 12 is a block diagram illustrating a self-navigational system according to one embodiment of the present invention; and

Figure 13 is a flow diagram illustrating a method for matching planes according to one embodiment of the present invention.

In accordance with common practice, the various described features are not drawn to scale but are drawn to emphasize specific features relevant to the exemplary embodiments.

## DETAILED DESCRIPTION

In the following detailed description, references are made to the accompanying drawings that form a part hereof, and in which is shown, by way of illustration, specific illustrative embodiments. However, it is to be understood that other embodiments may be utilized and that logical, mechanical, and electrical changes may be made. Furthermore, the method presented in the drawing figures and the specification is not to be construed as limiting the order in which the individual acts may be performed. The following detailed description is, therefore, not to be taken in a limiting sense.

Embodiments of the present disclosure provide systems and methods for using divergence to evaluate plane similarity. Divergence is a statistical function that measures the distance between two different probability distributions. As planes in two separate frames are represented as probabilistic distributions of points, a divergence calculation determines the statistical distance between the two planes. The statistical distance resulting from the divergence calculation measures the similarity of the two planes and if the resulting divergence is low enough, the planes can be said to represent the same plane. Further, using divergence to compare probability distributions is theoretically justified and assessable. Therefore, divergence comparisons can be used when system constraints require that design considerations be theoretically justified and assessable, like in safety critical systems.

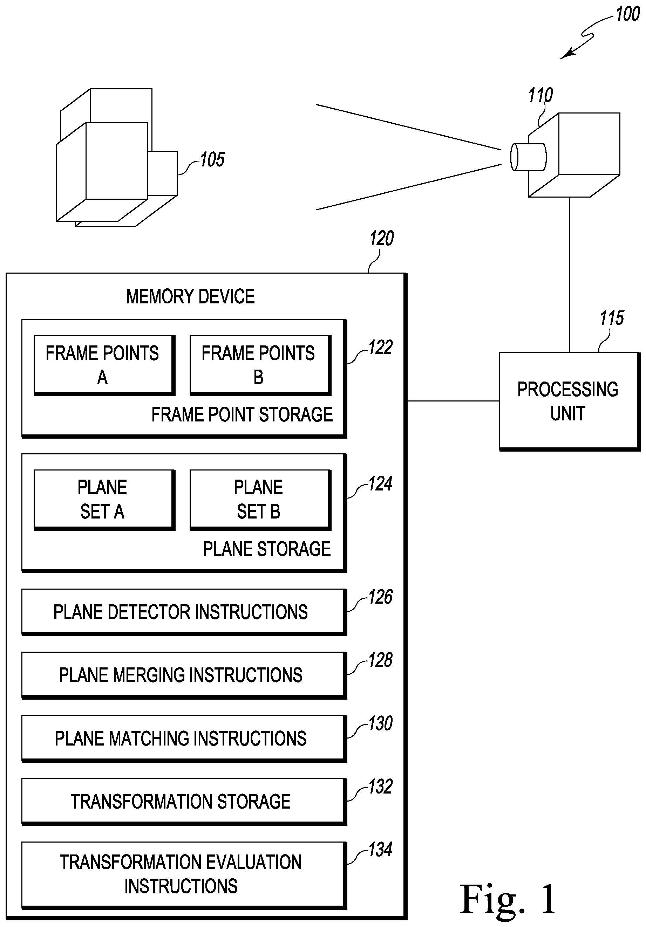

Figure 1 is a block diagram illustrating a system 100 for processing planes extracted from sensor-captured data of one embodiment of the present invention. System 100 includes a sensor 110 interfaced with a processing unit 115 which is coupled to a memory device 120. Memory device 120 stores data and processing instructions. The data includes frame point storage 122 which groups data according to the data's associated frame of sensor-captured data.

For example, frame point storage 122 includes a frame points A associated with a first sensor-captured data frame and a frame points B associated with a second sensor-captured data frame. Further, the data includes a plane storage 124, which also groups data according to the data's associated frame. For example, plane storage 124 includes a plane set A associated with the first sensor-captured data frame and a plane set B associated with the second sensor-captured data frame. In addition, the data, stored on memory device 120, includes a transformation storage 132 for storing transformation parameters derived from the processing of data stored in frame point storage 122 and plane storage 124. The phrase "transformation parameters," as used herein, in one embodiment, refers to a transformation matrix, (for example, a rotation matrix and translation vector) that, when multiplied by a vector of points, transforms the vector of points to represent a different vector of points. For example, system 100 multiplies a vector of points in frame points A by a transformation matrix to translate and rotate the vector of points to represent a vector of point in frame points B. In other embodiments, transformation representations other than matrices are used. For example, transformation representations include quaternions, vectors, Euler angles, and the like. Signal processing instructions includes plane extracting instructions 126, plane merging instructions 128, plane matching instructions 130, and transformation evaluation instructions 134.

In alternate embodiments, sensor 110 captures either two or three dimensional data frames. For example, in one embodiment where sensor 110 captures two dimensional frames, sensor 110 comprises a camera. In a another embodiment, where sensor 110 captures three dimensional frames, it comprises a 3D scanning or flash LiDAR camera (for example, such as the Swissranger SR-3100 manufactured by Mesa Imaging AG), or a 3D scanning rotating LiDAR (such as HDL-64E LiDAR manufactured by the Velodyne corporation, for example). In other embodiments, sensor 110 comprises devices such as, but not limited to, a radar sensor (such as a millimeter wave radar or weather radar, for example), a combination of radar and an electro-optical camera, or other combinations of sensors. In other embodiments, a three dimensional point-cloud is generated from data gathered over time or along a motion trajectory using sensors such as, but not limited to, sonar sensors, laser or radar altimeters, or sensors used for surveying methods, bathymetry, radar topography, structure from motion methods or interferometry.

In one embodiment, in operation, as sensor 110 captures data, the captured data are transmitted to processing unit 115 and stored on memory device 120. In one embodiment, processing unit 115 is a programmable device that processes the data as instructed by instructions stored on memory device 120.

Memory device 120 is an electronic hardware device for storing machine readable data and instructions. In one embodiment, memory device 120 stores data received in frames captured by sensor 110 into a frame point storage 122. In one embodiment, memory device 120 stores data in frame point storage 122 in a form that associates particular data with a particular frame. For example, a 3-D point cloud describing a first frame is stored in frame points A and a 3-D point cloud describing a second frame is stored in frame points B.

Processing unit 115 also stores processed information into memory device 120. For example, in one embodiment, processing unit 115 extracts planes from captured data stored in frame point storage 122. As with the frame point storage 122, in one embodiment, processing unit 115 stores extracted planes in plane storage 124 such that memory device 120 associates the extracted planes with a frame of data acquired by sensor 110. For example, processing unit 115 stores planes extracted from a frame A in plane set A and stores planes extracted from a frame B in plane set B. Other information derived directly or indirectly from data are also stored in memory device 120, such as one or more transformations (which describe differences between two frames of data captured by sensor 110 at different moments in time) are stored in transformation storage 132.

Processing instructions stored on memory device 120 direct processing unit 115 to process data received from sensor 110 and memory device 120 using divergence to evaluate plane similarity. For example, plane extracting instructions 126 direct processing device 115 to extract planes from a frame of data and store the planes in a plane set in plane storage 124. Plane merging instructions 128 instruct processing device 115 to identify merge able planes in a frame of data and merge the identified planes together. Plane matching instructions 130 direct processing device 115 to identify matching planes in different frames of data and use the matched planes to evaluate and test a transformation hypothesis. Each of these three functions using divergence to evaluate plane similarity are described in greater detail below.

*Plane Extraction*

Plane extraction to evaluate plane similarity using divergence is performed on sets of data captured by sensor 110. For this example, it is assumed that sensor 110 is a device that provides three-dimensional data points in a frame (such as a LIDAR, for example). However, in alternative embodiments, three-dimensional data is gathered through means other than sensors that provide three-dimensional data points. For example, three-dimensional data is acquired by combining (fusing) data from multiple two-dimensional sensors , such as multiple cameras.

Processing unit 115 identifies planar features from each frame of data provided by sensor 110. A planar feature is feature extracted from the data that has the appearance of a geometric plane and is defined by a set of points. In other words, if all points in a set **x** satisfy the geometric equation of a plane within some small margin or threshold *t*, as shown in the following equation, then the set of points **x** defines a planar feature.

$$\left| \mathbf{n'x} - d \right| \leq t,$$

where **n** is the normal vector of the planar feature and d is the orthogonal distance from the planar feature to the origin.

The normal vector **n** and the orthogonal distance $d$ are estimates calculated from the set of points that make up the planar feature. The points in the set of points which define a planar feature are said to be inliers or inlier data points because they are statistically consistent with points that would likely be found within the plane. Similarly, the points which do not meet the above criteria for a given planar feature are referred to as outliers because they are statistically not consistent with points that would likely be found within the plane. The planar features typically correspond to real world planes that form objects captured within the frame. For example, planar features often correspond to surfaces of objects such as a top of a table, a side of a box, a wall of a room or building, etc.

Embodiments of the present invention are not limited to data represented in rectangular coordinates. In alternate embodiments, other alternate coordinate systems are used. For example, in one embodiment, sensor 110 provides range data in spherical coordinates (i.e. a horizontal angle, a vertical angle, and a distance) rather than rectangular coordinates. In one embodiment, processing unit 115 converts the spherical coordinates to Cartesian coordinates. In other embodiments, processing unit 115 performs its function using the particular alternate coordinate system directly. For example, although the calculations described below are based on Cartesian coordinate space, one of ordinary skill in the art would appreciate that they could be redrafted to apply to any other particular coordinate space.

Further, other mathematical representations of the input data would be applicable to the extraction of features other than Cartesian planes, such as various two-dimensional manifold shapes. Thus, the description provided herein in terms of Cartesian coordinate space is provided by way of example and is not to be taken as limiting the scope of the present application.

It should also be noted that the calculations presented herein can be modified to extract other geometrical two-dimensional manifolds which can be expressed, for example, by the mathematical equation $f(\mathbf{x}, \theta) \leq t$, where **x** denotes points, $\theta$ denotes a set of geometrical parameters that can be estimated, and $f$ is a function. In the case of planar features described herein, the equation is expressed as $f(\mathbf{x}, \theta) = |\mathbf{n'x} - d|$, and $\theta = \{\mathbf{n}, d\}$. For an exemplary case of spherical features, the equation can be expressed as $f(\mathbf{x}, \theta) = |(\mathbf{x} - \mathbf{a})'(\mathbf{x} - \mathbf{a}) - r^2|$ and $\theta = \{\mathbf{a}, r\}$. Thus, the mathematical equation $f(\mathbf{x}, \theta) \leq t$, is the generalized equation for determining the point-to-feature distance of each point, where each point whose point-to-feature distance is less than or equal to the threshold is identified as an inlier data point of that feature. It is to be understood that the description below regarding planar features can also be adapted to such other features, either in addition to, or rather than, planar features.

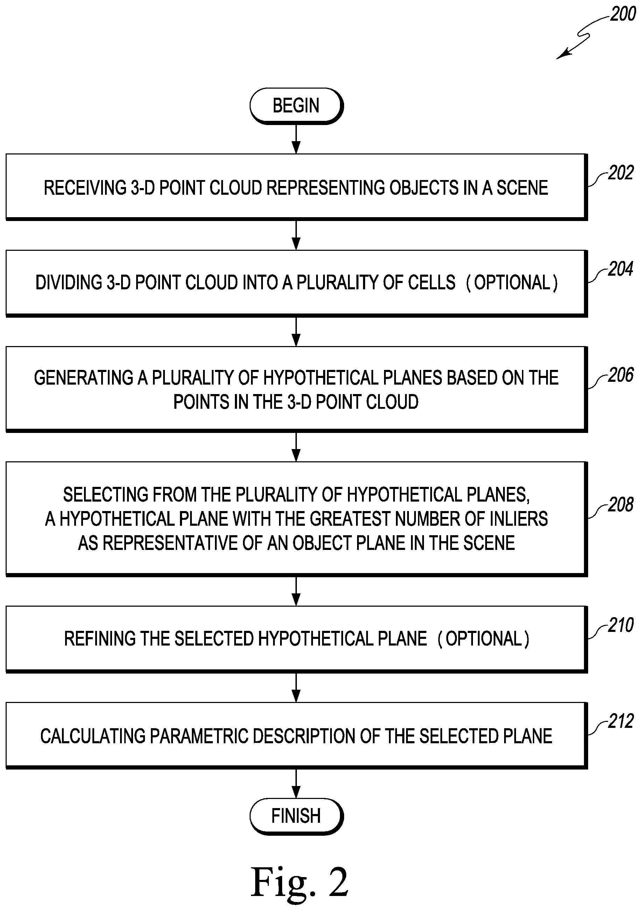

Figure 2 is a flow chart depicting of a method 200 for extracting a plane from a data-frame. In one embodiment, method 200 is performed by processing unit 115 on a frame of data captured by sensor 110. The method begins at block 202 with receiving a data-frame representing objects in a scene captured by a sensor. In one embodiment, the data are received and stored as a data-frame in frame point storage 122.

The method proceeds to 204 with dividing the data into a plurality of cells. That is, the processing time of the plane extraction can be improved by dividing the data into cells and processing the cells in parallel with separate processors. This is optional and for other embodiments, method 200 proceeds from 202 to 206 and the entire data-set of data captured by the sensor is processed as a single cell.

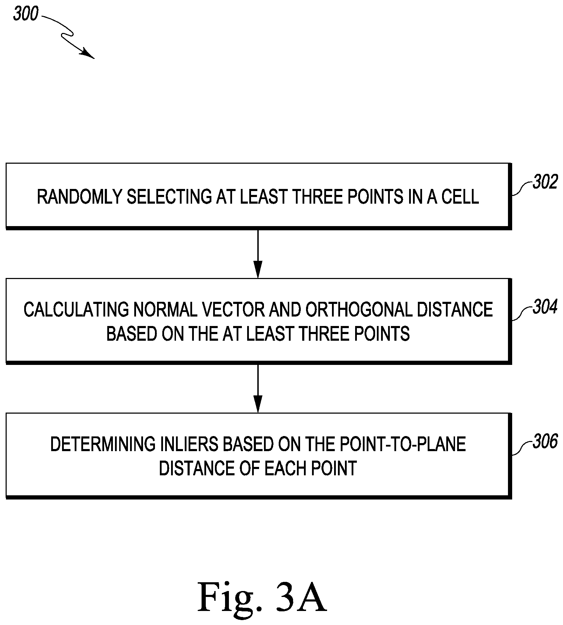

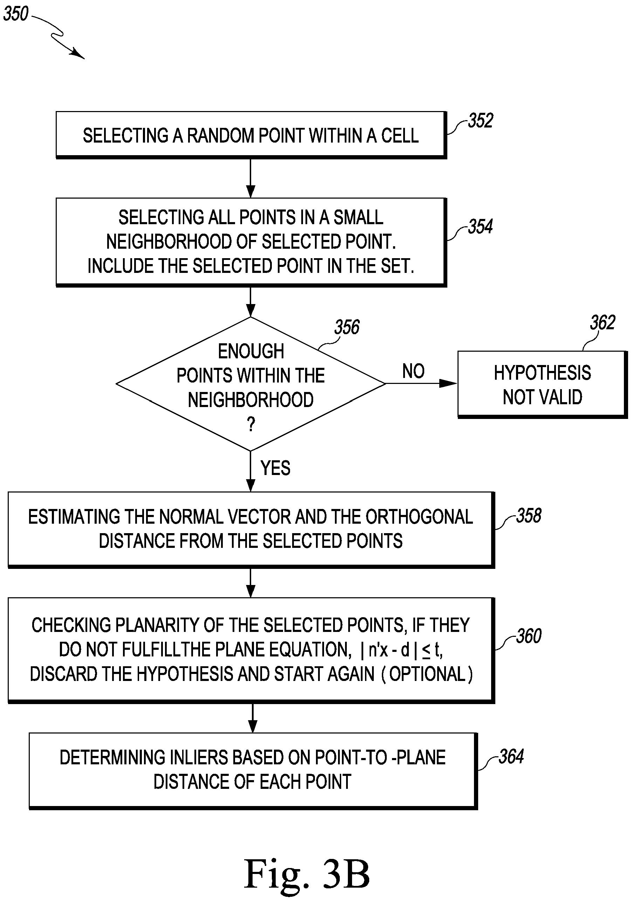

At block 206, the method proceeds with generating a plurality of hypothetical planes based on the data. Each hypothetical plane is characterized by its geometrical parameters, particularly by the normal vector **n** and the orthogonal distance d of the respective plane. Exemplary methods of generating each of the plurality of hypothetical planes are described in more detail in Figures 3A and 3B. When block 204 is executed and the data is divided into cells, the plurality of hypothetical planes would be generated for each cell.

At block 208, the method proceeds with selecting a representative hypothetical plane from the plurality of hypothetical planes. In particular, the selected representative hypothetical plane is a plane which provides a value of a quality function that is closer to a desired value than the non-selected hypothetical planes. The quality function for selecting the representative hypothetical plane is defined as a function whose value assesses the quality regarding how well a feature matches desired characteristics, although an explicit comparison with a desired value is not required.

For example, in one embodiment, a quality function of the representative hypothetical plane is a function of the number of inliers that define representative hypothetical plane. Hence, a desired value for the quality function could be defined as the largest number of inliers available from the calculated hypothetical planes rather than any specific value. Alternatively, the desired value for such a quality function could be any constant value. For this example, the hypothetical plane selected as representative hypothetical plane is the plane from the data-frame that has a quality function the greatest number of inliers provides a value of a quality function that is closest to the desired value and is selected as representative of a plane of an object in the scene. Thus, in some embodiments, the quality function is characterized as a local maximization/minimization problem for the respective cell. In such embodiments, the desired value is the local maximum/minimum value provided by the hypothetical planes.

It is to be understood that other quality functions can be used in other embodiments. Other exemplary quality functions include, but are not limited to, a function of the variance of inliers-to-plane distance and a function of the plane point density. For example, the function of the plane point density can be expressed as $-|iv$-plane point density$|$, where $iv$ is a desired value and the plane point density is the number of inliers divided by the estimated plane size. In such embodiments, an explicit comparison is made through the quality function. Thus, variations of different quality functions can be implemented in different embodiments.

Having a hypothetical plane with parameters **n** (the normal vector) and d (the orthogonal distance), the number of inliers is calculated as the number of points **x** within the cell (or within the entire point cloud, if no cell splitting was performed), that satisfy $|$**n'x** $- d| \leq t$ described above, for a given (e.g. user-specified) margin or threshold $t$. In one embodiment, the margin is selected to be $t = 0.1$m. The equation $dist = |$**n'x** $- d|$, described above determines the point-to-plane distance for each point. If the point-to-plane distance for a given point is less than the threshold value, 0.1m in this example, then that point is included in the set of inlier data points **x.**

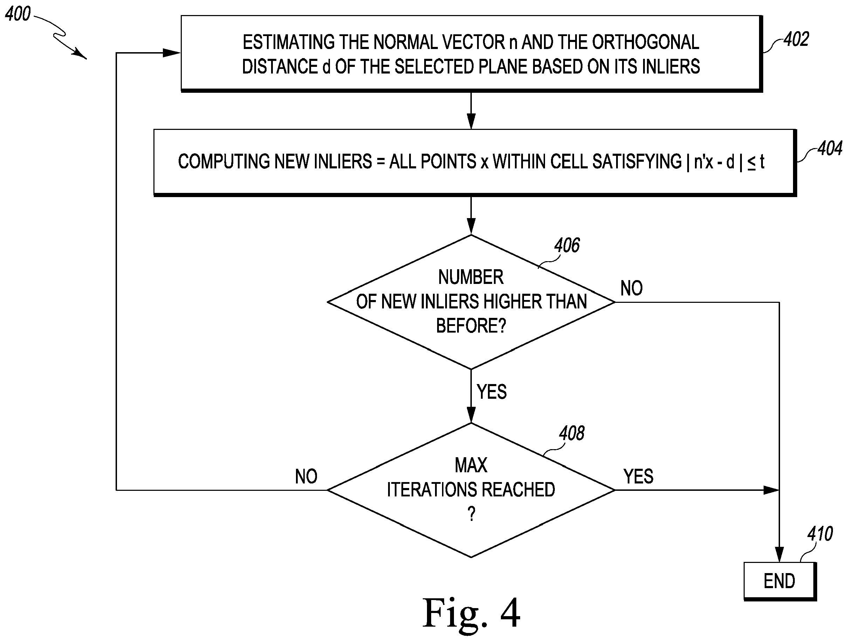

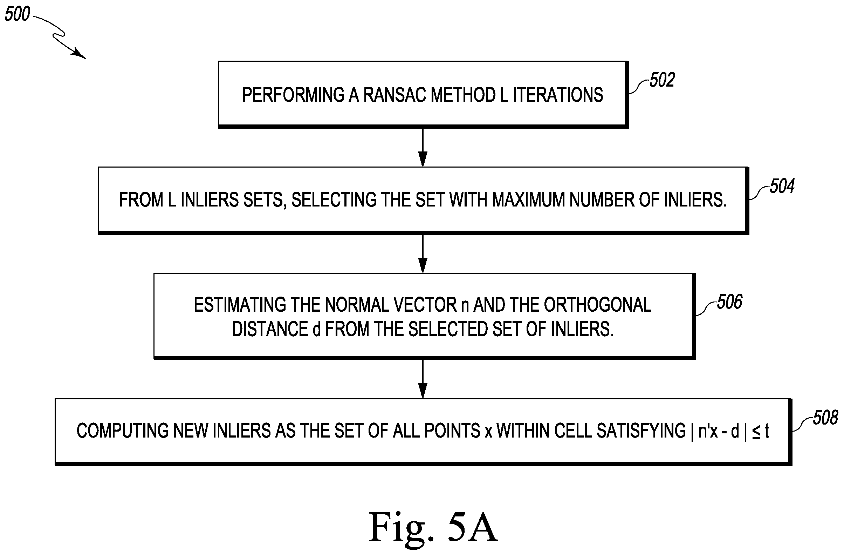

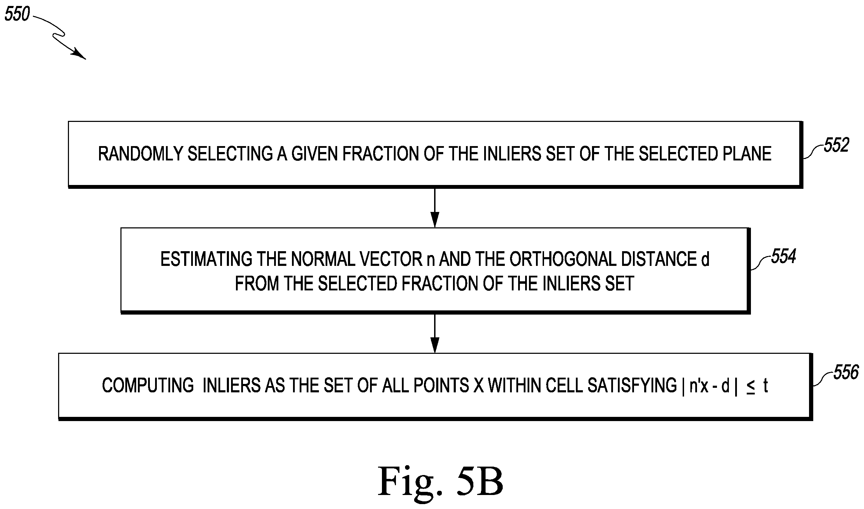

At block 210, the method proceeds with refining the selected plane to improve the estimate of the planar feature. This is optional and the process may in other embodiments proceed from block 208 to block 212. Exemplary methods of refining the selected plane are described in more detail with respect to Figures 4 and 5.

At block 212, the method proceeds with computing a parametric description of the extracted plane. For further processing in some applications, such as matching planar features between scenes, it might not be feasible to use the inliers of the plane directly due to computational and memory demands. Hence, in some implementations, the selected plane is described by the normal vector and orthogonal distance, in addition to other parameters such as the mean point (also referred to as centroid), to reduce the data size. For the mean point, all the points on the plane are used to compute the arithmetic mean. Also, since the inliers are a set of points, plane extracting instructions 126 instruct processing unit 115 to use a 3-D covariance matrix of the inlier points and additional parameters such as the number of inlier points to describe the plane. Plane extraction instructions 126 direct processing unit 115 to calculate the mean point (centroid) of a plane and the covariance matrix and store the information describing the detected plane in a plane set on plane storage 124.

To calculate the centroid $\hat{c}_i$ and the covariance matrix $P_i$, the inlier points in the plane are given by a set of three dimensional points. For example, each plane $\Pi_i$ is described as a set of points as shown by the following equation:

$$\Pi_i = \left\{ \pi_{i,j} \right\}_{j=1}^{n_i}, \quad \pi_{i,j} = [x_{i,j}\ y_{i,j}\ z_{i,j}]^T; \text{ where } \pi_{i,j} = [x_{i,j}\ y_{i,j}\ z_{i,j}]^T \text{ is a point in a Cartesian}$$

coordinate system and $i = 1, 2,..., N_A$.

Plane extraction instructions 126 direct processing unit 115 to compute the centroid $\hat{c}_i$ and covariance matrix $P_i$ for each plane in the $N_A$ planes stored in a plane set. The centroid $\hat{c}_i$ and covariance matrix $P_i$, for each plane in plane set, are described by the following equations:
$$\hat{c}_i = \frac{1}{n_i} \sum_{j=1}^{n_i} \pi_{i,j} \, ,$$
where $n_i$ is the number of points in the plane $\Pi_i$.

$$P_i = \frac{1}{n_i - 1} \sum_{j=1}^{n_i} \left( \pi_{i,j} - \hat{c}_i \right) \left( \pi_{i,j} - \hat{c}_i \right)^T .$$

Alternatively, other estimators are used to describe a plane. For example, the covariance is computed by the formula

$$P_i = \frac{1}{n_i} \sum_{j=1}^{n_i} \left( \pi_{i,j} - \hat{c}_i \right) \left( \pi_{i,j} - \hat{c}_i \right)^T .$$

It is to be understood that blocks 206 to 212 can be repeated to select a plurality of planes. For example, in some embodiments, blocks 206 to 212 are repeated until all the points in the point cloud or respective cell are determined to be part of a plane or until a maximum defined number of iterations have been performed. In some embodiments, each iteration is performed on the set of data points reduced by the number of data points already identified as inliers of a plane in previous iterations. In other embodiments, the input points are used in the successive iterations and additional logic is used to ensure the solutions' uniqueness, such as, but not limited to, filtration of the hypotheses generated in the block 206 to be non-repeating. In addition, whereas in this example, only one plane is selected at block 208, in other implementations multiple hypothetical planes may be selected. For example, each hypothetical plane having more than a threshold number of inliers is selected in some embodiments. Similarly, in some embodiments, each hypothetical plane having less than a threshold number of inliers is discarded. In some embodiments, the threshold varies with plane parameters. For example, in some embodiments, a smaller threshold is used for a plane having a centroid farther from the coordinates' origin than for a plane closer to the coordinates' origin.

Figure 3A is a flow chart depicting a method 300 of one embodiment of the present invention for calculating a hypothetical plane. Method 300 is repeated to calculate each of the plurality of hypothetical planes that are generated at block 206 in method 200 above. Method 300 starts at block 302 with selecting at least three random points to define the hypothetical plane. For example, in one embodiment, method 300 selects the three random points independently from one another. Method 300 proceeds at block 304 with calculating the normal vector and the orthogonal distance of the hypothetical plane. For example, in some embodiments, commonly known mathematical methods, such as least squares fit or estimate, calculate the normal vector and the orthogonal distance. At block 306, method 300 proceeds with determining the inlier data points based on the point-to-plane distance of each data point. The point-to-plane distance for each point is calculated using the calculated normal vector and orthogonal distance. If the point-to-plane distance is smaller than or equal to a threshold, the respective data point is identified as an inlier.

Figure 3B is a flow chart depicting a method 350 of one embodiment of the present invention for calculating a hypothetical plane. Method 350 is an alternative to method 300 for calculating a hypothetical plane. Method 350 is repeated to calculate each of the plurality of hypothetical planes that are generated at block 206 in method 200 above. In method 350 it is assumed that there is some structure in the 3-D point cloud such that a neighborhood of any point within the point cloud can be selected efficiently. Point clouds acquired by some scanning LiDARs typically posses this property as well as 3-D images acquired by, for example, flash LiDARs. In one embodiment, such neighborhood has a form of 2-D neighborhood in the range image provided by flash LiDAR. In another embodiment, for example for Velodyne scanning LiDAR, such neighborhood has a form of points scanned by adjacent lasers within a narrow azimuth interval. In yet another embodiment, such neighborhood is a standard geometric neighborhood in 3-D topology induced by $L_2$ norm in 3-D. In other embodiments, other forms of neighborhoods are used.

In method 300 above, a plane has to cover a substantial part of the cell to get a reasonably high probability of the three randomly selected points belonging to the same plane. However, the method 350 assumes that a plane is at least a partially continuous structure and if a randomly selected point belongs to the plane, its small neighborhood belongs there, too. The method 350 begins at block 352 with selecting a random point within a cell. At block 354 method 350 proceeds with selecting all points in a small neighborhood of the selected point, including the selected point. In one embodiment, for Velodyne LiDAR, 6 adjacent lasers and 1.2° azimuth span for the neighborhood is used. In other embodiments, different neighborhood sizes are used.

At block 356, method 350 determines whether there are enough points within the neighborhood. In particular, in this embodiment, method 350 determines if the number of points is greater or equal to a given threshold. The given threshold is set to at least 3, since 3 points are needed to define a plane. In one embodiment, half of the expected points within the neighborhood are used as the threshold. The number of expected points can be determined from sensor characteristics. If the number of points is below the threshold the plane hypothesis is considered to be invalid at block 362 and another plane hypothesis may be generated.

If the number of points is greater than or equal to the threshold, method 350 continues at block 358 with estimating the normal vector and the orthogonal distance of the hypothetical plane from all the points within the selected neighborhood. As described above, any commonly known mathematical estimator, such as a least squares estimator, can be used to estimate the normal vector and the orthogonal distance of the hypothetical plane.

Method 350 proceeds at block 360 with checking the planarity of the selected points within the selected neighborhood. In particular, the normal vector **n** and the orthogonal distance $d$, estimated at block 358, are used to determine how many points **x** within the neighborhood of points used to estimate **n** and $d$ satisfy the plane constraint $|\mathbf{n'x} - d| \leq t$. In one embodiment, the threshold is set to $t = 0.05$m. In one embodiment, 80% of points **x** within the neighborhood need to satisfy the constraint, otherwise the hypothetical plane is declared to be invalid. This is optional and for other embodiments, method 350 proceeds from 358 to 364 as the inlier data points are determined without first checking the planarity of points within a neighborhood.

At block 364, method 350 proceeds with determining the inlier data points based on the point-to-plane distance of each data point. The point-to-plane distance for each point is calculated using the calculated normal vector and orthogonal distance. If the point-to-plane distance is smaller than or equal to a threshold, the respective data point is identified as an inlier.

Figure 4 is a flow chart depicting a method 400 of one embodiment of the present invention for refining a calculation of a plane. Method 400 can be implemented for example, at block 210 of method 200 above. Method 400 begins at block 402 with estimating the normal vector **n** and orthogonal distance d of the selected plane based on the initial identified inliers (e.g. the inliers identified at block 208 of method 200). In one embodiment, a least squares estimator is used to calculate the normal vector and the orthogonal distance. In other embodiments, different mathematical estimators are used.

Method 400 proceeds at block 404 with computing a new set of inliers that includes all the points **x** within a cell that satisfy the equation $|\mathbf{n'x} - d| \leq t$. At block 406, method 400 proceeds with determining if the number of inliers increased.

For example, in some embodiments, method 400 is repeated until no new inliers are found. If the number of inliers increased, method 400 proceeds at block 408 with determining whether a maximum number of iterations has been reached. In one embodiment, only a single iteration through the cycle is used. In other embodiments, higher numbers of iterations are used. If the maximum number of iterations has not been reached, the method continues at block 402. If the maximum number of iterations has been reached, method 400 ends at block 410. In yet another embodiment, a different metric than a number of inliers is calculated and the refinement is repeated until there is no improvement of the respective metric.

Figure 5A is a flow chart depicting one embodiment of a method 500 for refining a calculation of a hypothetical plane of one embodiment of the present invention. Method 500 begins at block 502 with performing L iterations of RANdom SAmple Consensus (RANSAC) method 550 to refine the set of inliers. A RANSAC method 550 is an iterative method that estimates parameters of the hypothetical plane from a set of points that may contain outliers. An exemplary implementation of the method 550 is described in Fig. 5B. In one embodiment, the number of iterations, L, is 200. In other embodiments, other values of iterations are used. In other embodiments of method 500, one having skill in the art would appreciate that other different estimation techniques can be used to refine the set of inliers, such as MLESAC, least trimmed squares, and the like.

When L iterations of method 550 have been performed, the method 500 proceeds at block 504 with selecting from L sets of inliers the set with highest number of inliers. In one embodiment, when multiple sets have the same highest number of inliers, the first set with the highest number of inliers is selected. In other embodiments, different selection criterions are employed.

Method 500 proceeds at block 506 with again estimating the normal vector and orthogonal distance from the selected highest-number-of-inliers set. After updating the normal vector and the orthogonal distance, the final inliers are determined as a set of points **x** within the cell, which satisfy the equation $|\mathbf{n'x} - d| \leq t$ described above, at block 508, where the method 500 ends.

Figure 5B is a flow chart depicting an exemplary implementation of the method 550 of determining a set of inliers. Method 550 begins at block 552 with randomly selecting a subset of the original set of inliers. For example, in some embodiments, 1/3 of the original set of inliers is randomly selected. Method 550 proceeds at block 554 with estimating the normal vector **n** and orthogonal distance d of the hypothetical plane from the fraction of the original set of inliers selected at block 552. Method 550 ends at block 556, where a new inliers set is determined as a set of points **x** within the cell, which satisfy the equation $|\mathbf{n'x} - d| \leq t$ described above.

*Plane Matching*

In one embodiment, plane matching using divergence is used to evaluate plane similarity between sets of planes. In one embodiment, plane matching instructions 130 direct processing unit 115 to compare planes extracted from different frames of data. Sensor 110 captures a first frame of a real-world scene 105. Either at a subsequent point in time or from a different location, sensor 110 captures a second frame of the world scene 105. Because sensor 110 might have moved between the capture of the first frame and the second frame, the respective frames are assumed to represent different views of real world scene 105.

As explained above, in system 100, processing unit 115 identifies planes contained within a frame. In one embodiment, those planes are stored as a plane sets in plane storage 124 in terms of a centroid and a covariance matrix. In other embodiments, other plane parameters can be stored in plane storage 124 instead of centroid and covariance matrix. For example, but not limited to, plane storage 124 stores normal vectors, orthogonal distances, and the like.

When, for example, the centroid $\hat{c}_i^A$ and covariance matrix $P_i^A$ for each plane in the $N_A$ planes stored in plane set A,

$$\hat{c}_i^A = \frac{1}{n_i^A} \sum_{j=1}^{n_i^A} \pi_{i,j}^A \, ,$$

is estimated by the following equations: where $n_i^A$ is the number of points in the plane $\Pi_i^A$, $i = 1,...,N_A$.

$$P_i^A = \frac{1}{n_i^A - 1} \sum_{j=1}^{n_i^A} \left( \pi_{i,j}^A - \hat{c}_i^A \right) \left( \pi_{i,j}^A - \hat{c}_i^A \right)^T .$$

Further, the centroid $\hat{c}_k^B$ and covariance matrix $P_k^B$, for each plane in plane set B, is estimated by the following equations: $\hat{c}_k^B = \dfrac{1}{n_k^B}\displaystyle\sum_{l=1}^{n_k^B}\pi_{k,l}^B$, where $n_k^B$ is the number of points in the plane $\Pi_k^B$, $k = 1,...,N_B$.

$$P_k^{\ B} = \frac{1}{n_k^B - 1}\sum_{l=1}^{n_k^B}\left(\pi_{k,l}^B - \hat{c}_k^B\right)\left(\pi_{k,l}^B - \hat{c}_k^B\right)^T .$$

In one embodiment, the three dimensional points that comprise a plane are assumed to follow a multivariate Gaussian distribution. The multivariate Gaussian distribution describes a set of correlated real-valued random variables each of which is clustered around the centroid. While the points can follow other probability distributions, the true distribution of the points is unknown and the Gaussian distribution has the highest entropy for a particular centroid and covariance matrix. However, in other embodiments, other probability distributions are used to describe the three dimensional points that comprise a plane. Modeling the three dimensional points as a realization of a random variable described by a probability distribution facilitates the computation of divergence values. Divergence, as used herein, is a function that measures the distance between two probability distributions. Divergence values are calculated using divergence measures such as Kullback-Leibler divergence, Jenson-Shanon divergence, Bhattacharyya distance, and Hellinger distance. Divergence values are also calculated using mutual information, where mutual information is a measurement of the mutual dependence of two variables, correlation, and the like.

When planes are identified in a plane set in terms of a centroid and covariance matrix, plane matching instructions 130 direct processing unit 115 to identify planes that exist in different plane sets. Plane matching instructions 130 also instruct processing unit 115 to estimate a transformation that describes the difference between the position of two different frames. Plane matching instructions 130 instruct processing unit 115 to identify planes that are found in both plane set A and plane set B by calculating the divergence between the planes in both plane sets. Through finding the minimal divergences between the planes of plane set A and the planes of plane set B, using the transformation evaluation instructions 134, processing unit 115 generates a transformation hypothesis that describes the movement of sensor 110 between the capture of a first frame and a second frame. To generate the transformation hypothesis, processing unit 115 applies an initial hypothesis to the planes in one of plane set A or plane set B, where the initial hypothesis attempts to describe the differences between a first frame and a second frame. In some implementations, the transformation hypothesis includes a translation vector and a rotation matrix that are represented as constants. Alternatively, the values used for the translation vector and the rotation matrix are uncertain and the uncertainty is represented by probability distributions. When the transformation hypothesis is applied to the planes in one of plane set A and plane set B, plane matching instructions 130 direct processing unit 115 to calculate a divergence value for combinations of planes in plane set A with planes in plane set B. The combination of planes in plane set A and planes in plane set B that yields the lowest divergence calculation is assumed to be the best matching plane combination. In one embodiment, transformation hypotheses are stored in transformation storage 132.

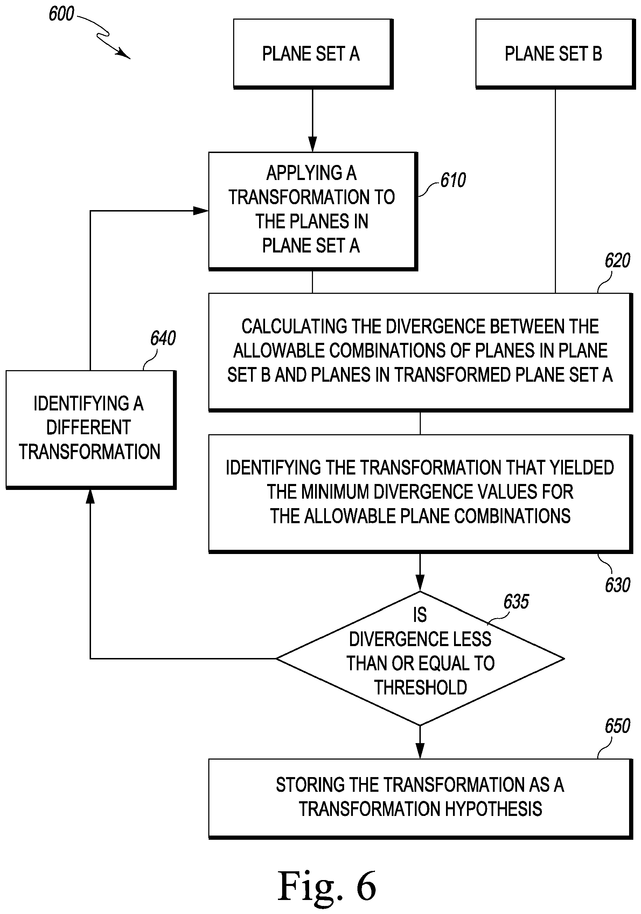

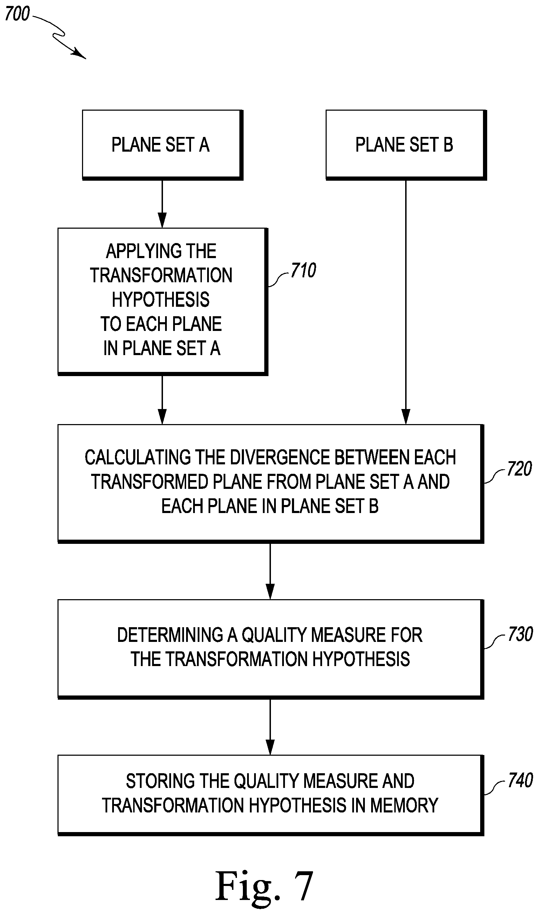

When processing unit 115 finds a combination of planes that yields the lowest divergence values, the transformation hypothesis is evaluated. In one embodiment, plane matching instructions 130 direct processing unit 115 to combine the results of the divergence calculations for the different matched planes identified in plane set A and plane set B. The combined result is then compared against a threshold or other divergence calculation to evaluate the quality of the hypothesis. When a transformation hypothesis is found that meets a predefined hypothesis criteria, the hypothesis is stored as a final transformation hypothesis. The use of divergence to perform plane matching is described in greater detail below in regards to Figs. 6 and 7.

Figure 6 illustrates a process 600 for determining a transformation hypothesis using divergence. To determine a transformation hypothesis, process 600 compares the planes extracted from a frame of data with the planes extracted from a different frame of data using divergence. Process 600 applies the transformation to a plane set and evaluates the quality of the transformation hypothesis by comparing the plane set to another non-transformed plane set. For example, process 600 applies the transformation hypothesis to all matched planes in plane set A and compares the transformed matched planes in plane set A to the non-transformed matched planes in plane set B.

Process 600 begins at block 610 by applying a transformation to all of the planes in plane set A or a subset of planes in plane set A. The planes in plane set A are defined by a centroids $\hat{c}_A$ and covariance matrices $P_A$. To apply the transformation, process 600 uses a translation vector $t$ and a rotation matrix $R$. In one embodiment, process 600 determines new centroids $\hat{c}_{A,RT}$ and covariance matrices $P_{A,RT}$ for planes in plane set A as defined by the following equations:

$$\hat{c}_{A,RT} = R\left(\hat{c}_A - t\right)$$

$$P_{A,RT} = RP_A R^T$$

In other embodiments, other equations can be used. The values for translation vector $t$ and a rotation matrix R are generally constant, however, they may also be random variables with a mean and covariance matrix.

Process 600 proceeds at block 620 by calculating the divergences between the allowable combinations of planes in plane set B and planes in transformed plane set A. Assuming that the distribution of the points in each plane conforms to a Gaussian distribution, the distribution of a transformed plane in plane set A is defined by the following equation:

$P_{A,RT} = N(\hat{c}_{A,RT}, P_{A,RT})$, which appears like the following when expanded:

$$p_{A,RT} = \frac{1}{(2\pi)^{3/2} |P_{A,RT}|^{1/2}} e^{\left(-\frac{1}{2}(x-\hat{c}_{A,RT})' P_{A,RT}^{-1}(x-\hat{c}_{A,RT})\right)},$$

where $x$ represents a point, which belongs to the transformed plane in plane set A.

Likewise, each plane in plane set B is also defined by a centroid $\hat{c}_B$ and a covariance matrix $P_B$. Further, a plane in plane set B is also described by a probability distribution as shown by the following equation:

$p_B = N(\hat{c}_B, P_B)$, which appears like the following when expanded:

$$p_B = \frac{1}{(2\pi)^{3/2} |P_B|^{1/2}} e^{\left(-\frac{1}{2}(x-\hat{c}_B)' P_B^{-1}(x-\hat{c}_B)\right)},$$

where $x$ represents a point, which belongs to the plane in plane set B.

The transformed distributions associated with plane set A and the distributions associated with plane set B are compared against one another using a Kullback-Leibler divergence to determine the similarity between two planes. The Kullback-Leibler divergence is calculated according to the following equation:

$$D(p_{A,RT} \| p_B) = 0.5 \left( \ln \frac{\det(P_B)}{\det(P_{A,RT})} + trace(P_B^{-1} P_{A,RT}) + (\hat{c}_B - \hat{c}_{A,RT})^T P_B^{-1}(\hat{c}_B - \hat{c}_{A,RT}) - 3 \right).$$

As the Kullback-Leibler divergence is not symmetric, the reverse divergence for the two planes is calculated according to the following equation:

$$D(p_B \| p_{A,RT}) = 0.5 \left( \ln \frac{\det(P_{A,RT})}{\det(P_B)} + trace(P_{A,RT}^{-1} P_B) + (\hat{c}_{A,RT} - \hat{c}_B)^T P_{A,RT}^{-1}(\hat{c}_{A,RT} - \hat{c}_B) - 3 \right)$$

and then averaged as follows:

$$D = \frac{D(p_{A,RT} \| p_B) + D(p_B \| p_{A,RT})}{2}.$$

Process 600 performs the same calculation for each allowable combination of planes from plane set A and plane set B to acquire a $D$ value for each allowable combination. In other embodiments, alternative measures to Kullback-Leibler are used to compare probability distributions.

The above equations for calculating divergence between planes compare the planes in all three axes of freedom in three-dimensional space. In alternate implementations, the divergence computation compares the planes in restricted directions (axes of freedom). For example, in one implementation, the divergence calculation compares the densities of the planes in the direction of an average normal vector. The $D$ value for calculating the divergence in the direction of an average normal vector is given by the following equation:

$$D = \frac{D\left(r_{A,RT} \| r_B\right) + D\left(r_B \| r_{A,RT}\right)}{2}.$$

The value $r_{A,RT}$ is given by the equation $r_{A,RT} = N(n^T \hat{c}_{A,RT}, n^T P_{A,RT} n)$ and the value $r_B$ is given by the equation $r_B = N(n^T \hat{c}_B, n^T P_B n)$, where $n$ is a normalized average vector of normal vectors of particular planes calculated as $\dfrac{n_{A,RT} + n_B}{2}$.

In another implementation, the divergence compares the densities in the directions of normal vectors. In this implementation, the $D$ value is represented by the following equation:

$$D = \frac{D\left(r_{AA} \| r_{BB}\right) + D\left(r_{AB} \| r_{AA}\right) + D\left(r_{BA} \| r_{BB}\right) + D\left(r_{BB} \| r_{BA}\right)}{4}.$$

The values $r_{AB}$, $r_{AA}$, $r_{BA}$, and $r_{BB}$ are defined by the following equations:

$$r_{AB} = N\left(n_B^{\ T} \hat{c}_{A,RT}, n_B^{\ T} P_{A,RT} n_B\right),$$

$$r_{AA} = N\left(n_{A,RT}^{\ T} \hat{c}_{A,RT}, n_{A,RT}^{\ T} P_{A,RT} n_{A,RT}\right),$$

$$r_{BA} = N\left(n_{A,RT}^{\ T} \hat{c}_B, n_{A,RT}^{\ T} P_B n_{A,RT}\right),$$

and

$$r_{BB} = N\left(n_B^{\ T} \hat{c}_B, n_B^{\ T} P_B n_B\right).$$

The value $n_{A,RT}$ is a normal vector of the rotated and translated plane from plane set A. The value $n_B$ is a normal vector of a plane from plane set B.

In a further implementation, the divergence compares the densities in the direction of the smallest eigenvector. In this implementation, the $D$ value is represented by the following equation:

$$D = \frac{\left(D\left(r_{A,RT}^{ev} \| r_B^{ev}\right) + D\left(r_B^{ev} \| r_{A,RT}^{ev}\right)\right)}{2}.$$

The value $r_{A,RT}^{ev}$ is given by the equation $r_{A,RT}^{ev} = N\left(n_{bi}^{\ T} \hat{c}_{A,RT}, n_{Bi}^{\ T} P_{A,RT} n_{Bi}\right)$ and the value $r_B^{ev}$ is given by the equation $r_B^{ev} = N\left(n_{Bi}^{\ T} \hat{c}_B(i), n_{Bi}^{\ T} P_B(i,i) n_{Bi}\right)$ where $i$ is the index of the smallest eigenvalue of $P_B$ and $n_{Bi}$ is its corresponding eigenvector. Note that the previously mentioned possibilities for computation of the $D$ value are examples and not a complete list of all possibilities.

Process 600 proceeds at block 630 by identifying the combination of planes that yielded the lowest $D$ values for the plane combinations. The planes that yield the lowest $D$ values are considered to be the most similar planes. Further when the $D$ values are identified, process 600 proceeds at block 635 by comparing the $D$ values against a threshold $T$ as shown by the following equation:

$$D \leq T\ .$$

When a $D$ value is less than or equal to the threshold $T$, a plane from plane set A is considered to match a plane from plane set B and the transformation hypothesis used to calculate the $D$ values along with the resultant $D$ values are stored in a memory device (shown at 650). When the $D$ value is greater than the threshold $T$, a new transformation is identified and process 600 proceeds at block 640 by identifying a different transformation hypothesis and iteratively recommencing at block 610.

Figure 7 illustrates a process 700 for evaluating the quality of a transformation hypothesis. To calculate the quality of a transformation hypothesis, process 700 begins at block 710 by applying the transformation hypothesis to each plane in a plane set A. In certain implementations, the transformation hypothesis is identified by process 600 in Fig. 6. When each plane in plane set A has been transformed by the transformation hypothesis, process 700 proceeds at block 720 by calculating the divergence between the transformed planes of plane set A and the planes in plane set B. The result of the divergence calculation is a $D$ value for each possible pair of planes, where one plane is in plane set A and the other plane is in plane set B. In some implementations, the $D$ values are stored on a memory device.

Further, when the $D$ values are calculated, process 700 proceeds to block 730 by determining a quality measure for the transformation hypothesis. Process 700 calculates the quality measure by compiling all the $D$ values stored in the memory to make a unitary quality measure. The unitary measure of the $D$ values is formed by summing, or weighted summing, the $D$ values together, finding the average or weighted average of the $D$ values, multiplying or weighted multiplying of the $D$ values together, and the like. In some embodiments, when weights are used for calculation of the D values, weights are set *a priori* by a user. Alternatively, the weights are determined by properties of each pair of planes. For example, properties of planes that are used to determine weights include plane orientation in space, plane size, plane smoothness, and the like. The quality measure is compared against a quality measure threshold value to determine the sufficiency of the transformation hypothesis. When the quality measure is calculated and the quality measure indicates that the transformation hypothesis was not of sufficient quality, process 700 directs process 600 to recommence to find a new transformation hypothesis. When the quality measure is sufficient, process 700 proceeds to block 740 by storing the quality measure and transformation hypothesis on at least one memory device such as memory device 120. The transformation hypothesis is then used as a final transformation hypothesis.

The methods above produce an output in the form of a hypothesis stored on memory device 120. The hypothesis defines a transformation that represents an estimation of the differences between a first frame and a second frame. In some implementations, the transformation is used to transform planes appearing in a first frame into planes appearing in a second frame, or match planes appearing in the first frame with corresponding planes in the second frame. In other words, a plane identified in the first can be identified and located in the second frame using the transformation hypothesis.

*Plane Merging*

In one embodiment, plane merging using divergence is used to evaluate two planes which might represent a single physical surface in a real world scene. In some embodiments, plane merging instructions 128 in Figure 1 direct processing unit 115 to process planes in a plane set. Plane merging instructions 128 instruct processing unit 115 to merge those planes that should be merged together, and remove those planes that are smaller than a minimum plane area threshold to reduce false positive detections of planes.

In certain embodiments, the three dimensional points that comprise a plane are assumed to follow a multivariate Gaussian distribution. In other embodiments, other probability distributions are used. Because the points follow a probability distribution, processing unit 115, executing plane merging instructions 128, uses divergence values to compare the centroid and covariance matrix of a plane with the centroid and covariance matrix of another plane in a plane set. In comparing the distributions of two different planes from the same plane set, processing unit 115 determines the similarity between two different planes. If the divergence value between two different planes is below a certain threshold, processing unit 115 merges the planes together. Processing unit 115 calculates the divergence using similarity measures like Kullback-Leibler divergence, Jenson-Shanon divergence, Bhattacharyya distance, Hellinger distance, mutual information, correlation, and the like. A further description of the execution of plane merging instructions 128 is found below.

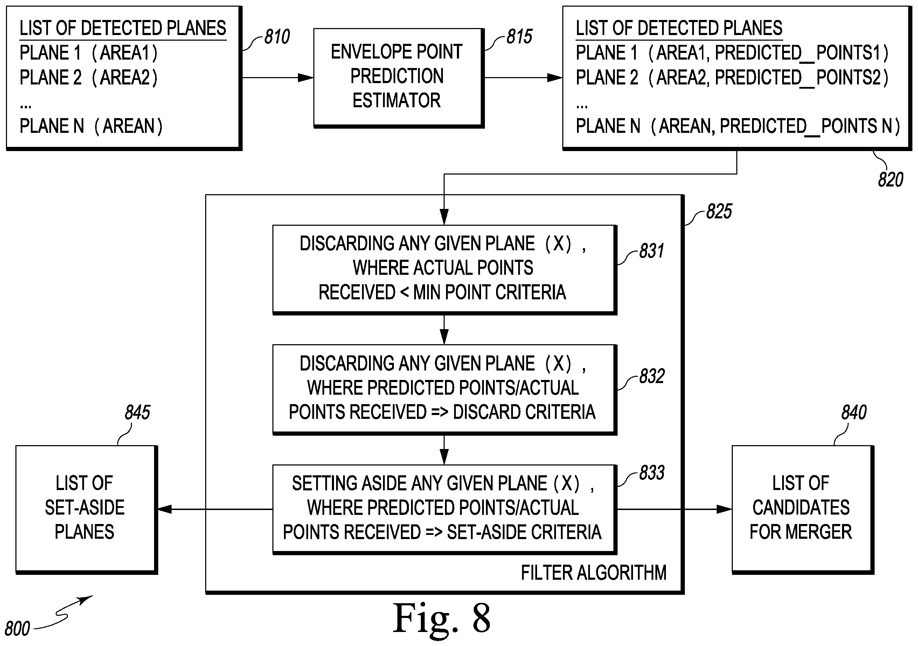

As illustrated in Figure 8, in one embodiment, a process 800 begins with an initial list of detected planes 810 as determined from an imaging process such as described above in relation to plane extracting instructions. Plane matching instructions 128 in Fig. 1 direct processing unit 115 to apply algorithms to the initial list of detected planes 810 to merge those planes that should be merged together and remove those planes that are smaller than a minimum plane area threshold. Because larger planes in a real-work scene have a greater chance to be detected entirely and far less chance of being false positives, in one embodiment, processing unit 115 sorts the initial list of detected planes 810 so that detected planes with the greatest "area" appear first on the list. In other embodiments, different criterions for sorting might be used, e.g. density of points on a plane, plane location in the scene, etc. As would be appreciated by one of ordinary skill in the art upon reading this specification, because the data deemed to represent real-life planes is in fact only a set of sensor measurements, determining the plane area is a non-trivial task.

In one embodiment, processing unit 115, executing plane merging instructions 128, estimates the plane area using an envelope model. The envelope constructed around the plane is in fact an ashlar with four narrow sides orthogonal to the plane. The remaining two sides (the largest ones) are parallel with the plane. The area of either largest side of the envelope is used as a measurement of the area of the plane it represents. The two largest sides are parallel and both their shape and their area are identical. In other embodiments, other estimates of the plane area might be used.

In one embodiment, an envelope for a plane is constructed as follows based on determining a covariance matrix $\mathbf{P}$ for the three-dimensional points set corresponding to the detected plane. A plane is specified by its centroid $\hat{\mathbf{c}}$, points covariance matrix $\mathbf{P}$, normal vector $\mathbf{n}$ and the orthogonal distance $d$. Having a plane consisting of $N$ plane points (sensor returns) $\mathbf{x}_i$, the following relations hold:

$$\mathbf{P} = \frac{1}{N-1} \sum_i (\mathbf{x}_i - \hat{\mathbf{c}})(\mathbf{x}_i - \hat{\mathbf{c}})'$$

$$\hat{c} = \frac{1}{N} \sum_i \mathbf{x}_i \quad \mathbf{P} = \frac{1}{N-1} \sum_i (\mathbf{x}_i - \hat{c})(\mathbf{x}_i - \hat{c})',$$
$d = \mathbf{n}'\hat{c}$      the envelope is then constructed from the principal components of the plane as follows:

From the covariance matrix $\mathbf{P}$, one can get the eigenvalues $\lambda_1$, $\lambda_2$ and $\lambda_3$ and corresponding eigenvectors $\mathbf{v}_1$, $\mathbf{v}_2$ and $\mathbf{v}_3$, where $\lambda_1 \geq \lambda_2 \geq \lambda_3$. The eigenvalues are variances in directions of eigenvectors (the principal components). Eigenvectors are orthogonal and both eigenvectors and eigenvalues depend on the orientation and size of the plane pointcloud in a 3-dimensional space. Moreover, since the point cloud is a plane, $\mathbf{v}_3 \approx \mathbf{n}$. Points in the $\mathbf{v}_1$ and $\mathbf{v}_2$ directions are spread rather uniformly while they are Gaussian in $\mathbf{v}_3$ direction. In one embodiment, before constructing the envelope, $\lambda_1$ and $\lambda_2$ are each multiplied by $(0.9*\sqrt{3})^2$ to compensate for different spread of points in these directions. This correction ensures that the envelope is supposed to contain around 90% of plane points.

Because the eigenvalues are variances in the main directions, one can therefore take their square roots to get standard deviations. In one embodiment, the square root of the smallest eigenvalue ($\lambda_3$) is used to obtain a measurement of a plane's thickness. In other embodiments, other estimates of the plane's thickness might be used. The square roots of the remaining two eigenvalues ($\lambda_1$ and $\lambda_2$) are used to model the plane as a rectangle. Having unit-length eigenvectors $\mathbf{v}_1$ and $\mathbf{v}_2$, four corners of the rectangle that models the plane are then given by $c \pm \sqrt{\lambda_1} \mathbf{v}_1 \pm \sqrt{\lambda_2} \mathbf{v}_2$. The area of such rectangle is given as $2 * \sqrt{\lambda_1} * 2 * \sqrt{\lambda_2}$, which is an estimate of the plane size. The above description is one way to estimate the plane area and is not meant to be limiting. Other means for defining area are available to those of ordinary skill in the art and can be used to differentiate larger detected planes from smaller planes from the data set. Processing unit 115, executing plane merging instructions 128, constructs a rectangular parallelepiped (or an ashlar) envelope around the point cloud representing the plane. Since eight vertices of such ashlar are given as $c \pm \sqrt{\lambda_1} \mathbf{v}_1 \pm \sqrt{\lambda_2} \mathbf{v}_2 \pm \sqrt{\lambda_3} \mathbf{v}_3$, our representation is equivalent to taking the largest side from the ashlar (which has 6 sides - 3 pairs, each pair consisting of sides of exactly same shapes) and using it to estimate the plane area.

If the plane area estimate is used only for sorting purposes, in some embodiments, multiplicative constants can be omitted. For example, the estimate $\sqrt{\lambda_1} * \sqrt{\lambda_2}$ could be used instead of $2 * \sqrt{\lambda_1} * 2 * \sqrt{\lambda_2}$ and the multiplication by $(0.9*\sqrt{3})^2$ as mentioned above can be skipped.

Once an area for each of the detected planes is calculated, processing unit 115 sorts the planes in the list of detected planes 810 in descending order. This ordering is performed because the largest detected planes are the most likely to be real and distinct planes rather than false positives, and thus are the most stable and provide the most accurate estimates. As mentioned above, in some embodiments, other sorting criteria might be used than the plane area.

For each plane in the detected plane list 810, the point prediction estimator calculates a number of predicted points that can be expected to form the plane for a given plane's parameters. This can alternately be performed either before or after list of detected planes 810 is sorted by area. Point prediction is sensor specific. That is, for a plane of a given size, location, and orientation, one can expect there to be "N" number of point returns on that plane when the resolution of the sensor is known. For example, for the Velodyne LiDAR, lasers are distributed in specific horizontal and vertical angular resolutions. The number of laser points returned for a given plane depends on the distance of the plane (not the orthogonal distance), the angle under which it is seen from the point of view of the LiDAR, and the size of the plane.

In one embodiment, one can use spherical angles to predict the number of sensor returns. There are many algorithms for spherical angle computation known to persons skilled in the art. Having the spherical angle, the number of returns can be predicted when the angular resolution of the sensor is known.

In the explanations that follows, the sensor used to obtain data is the Velodyne LiDAR HDL-64E. One of ordinary skill in the art after reading this specification would appreciate that description provided below is readily adapted to other sensors.

Since the performance of the spherical angle predictor is not always sufficient, in another embodiment, a model-based estimator might be used. First, the plane is again modeled by the rectangular model described above. In this case, include all multiplication constants when constructing the rectangular model. So, the rectangular model vertices are given by $c \pm \sqrt{\lambda_1}\, \mathbf{v}_2 \pm \sqrt{\lambda_2}\, \mathbf{v}_2$, where both $\lambda_1$ and $\lambda_2$ are before multiplied by $(0.9*\sqrt{3})^2$ as described above. The challenge is that the rectangular model will not likely be orthogonal to the direction of view, but it is typically skewed in various directions.

We proceed constructing the number of points (sensor returns) prediction model the following way. Recalling that a plane is represented by its equation $\mathbf{n}'\mathbf{x} = d$ and its centroid $\mathbf{c}$, projection axes for a Velodyne LiDAR, $\mathbf{u}_V$; $\mathbf{v}_V$; $\mathbf{w}_V$ are computed the following way:

$$\mathbf{u}_v = \frac{c}{\|c\|}$$

1.

2. $\mathbf{v}_V$ is given by the following conditions $\mathbf{v}'_V \mathbf{u}_V = 0$ : and $\mathbf{v}'_V [0\ 0\ 1] = 0$. This specifies a line. When the norm is 1, two solutions emerge differing by sign either of which can be picked. The solution is found as

$$\mathbf{v}_V = \frac{1}{\sqrt{\mathbf{u}_V(1)^2 + \mathbf{u}_V(2)^2}}\left[-\mathbf{u}_V(2) \quad \mathbf{u}_V(1) \quad 0\right].$$

This formula does not provide a unique solution in a special case, when $\dfrac{c}{\|c\|} = \begin{bmatrix} 0 & 0 & 1 \end{bmatrix}.$ In such a case, any unit-length vector orthogonal to [0 0 1] can be picked as $\mathbf{v}_V$, for example [1 0 0].

3. $\mathbf{w}_V = \mathbf{u}_V \times \mathbf{v}_V$

To estimate lengths of intersection of the rectangle envelope and both horizontal and vertical projection planes, define the horizontal projection plane as $\mathbf{w}'_V \mathbf{x} = 0$ and the vertical projection plane as $\mathbf{v}'_V \mathbf{x} = 0$, $\mathbf{x}$ being an arbitrary point in three-dimensional space. Looking at the horizontal case first, compute the direction vector $\mathbf{d}_h$ of the intersection from the following conditions: $d_h'\mathbf{n} = 0$ ($\mathbf{d}_h$ belongs to the plane), $d_h'\mathbf{w}_V = 0$ ($\mathbf{d}_h$ belongs to the horizontal projection plane), and $\mathbf{d}_h'\mathbf{v}_V = 1$ ($\mathbf{d}_h$ is not orthogonal to $\mathbf{v}_V$). The vertical direction vector $\mathbf{d}_v$ is derived the same way. Therefore we get:

$$\mathbf{d}_h = \begin{bmatrix} \mathbf{n}' \\ \mathbf{w}'_V \\ \mathbf{v}'_V \end{bmatrix}^{-1} \begin{bmatrix} 0 \\ 0 \\ 1 \end{bmatrix}, \mathbf{d}_v = \begin{bmatrix} \mathbf{n}' \\ \mathbf{w}'_V \\ \mathbf{v}'_V \end{bmatrix}^{-1} \begin{bmatrix} 0 \\ 1 \\ 0 \end{bmatrix}$$

$\mathbf{d}_v$ and $\mathbf{d}_h$ are further normalized, since they are not unit-length by default.

Denoting the vectors representing sides of the plane-rectangle as **a,b** (with their norm being equal to rectangle sides), also denote $\mathbf{d}_a = \dfrac{a}{\|a\|}$ and $\mathbf{d}_b = \dfrac{b}{\|b\|}.$

Starting with $\mathbf{d}_h$, compute intersections with two infinite-length bands, one formed by '**b**' sides of the rectangle and the second one formed by '**a**' sides. The minimum of those two is the intersection with the rectangle envelope.

$$i_{\mathrm{h}} = \min\left\{\frac{\|\mathbf{a}\|}{\left|\mathbf{d'}_a\,\mathbf{d}_\mathrm{h}\right|}, \frac{\|\mathbf{a}\|}{\left|\mathbf{d'}_b\,\mathbf{d}_\mathrm{h}\right|}\right\}.$$

Therefore, for the length of horizontal intersection $i_{\mathrm{h}}$, we have $\qquad$ Similarly, for the vertical

$$i_{\mathrm{v}} = \min\left\{\frac{\|\mathbf{a}\|}{\left|\mathbf{d'}_a\,\mathbf{d}_\mathrm{v}\right|}, \frac{\|\mathbf{a}\|}{\left|\mathbf{d'}_b\,\mathbf{d}_\mathrm{v}\right|}\right\}.$$

intersection,

Having $i_{\mathrm{v}}$, $i_{\mathrm{h}}$, compensate for skewness of the plane, taking $i_{\mathrm{v}} \cdot |\mathbf{d'}_{\mathrm{v}}\,\mathbf{w}_V|$ and $i_{\mathrm{h}} \cdot |\mathbf{d'}_\mathrm{h}\,\mathbf{v}_V|$ instead. Since compensated $i_{\mathrm{v}} \cdot |\mathbf{d'}_{\mathrm{v}}\,\mathbf{w}_V|$ and $i_h \cdot |\mathbf{d'}_h\,\mathbf{v}_V|$ are evaluated on a vector orthogonal to $\mathbf{c}$, use trigonometric functions to obtain $\alpha_\mathrm{h}$ and $\alpha_\mathrm{v}$ using:

$$\tan\left(\frac{\alpha_\mathrm{h}}{2}\right) = \frac{i_\mathrm{h} \cdot \left|\mathbf{d'}_\mathrm{h}\,\mathbf{v}_V\right|}{2\|\mathbf{c}\|}, \quad \tan\left(\frac{\alpha_\mathrm{v}}{2}\right) = \frac{i_\mathrm{v} \cdot \left|\mathbf{d'}_\mathrm{h}\,\mathbf{w}_V\right|}{2\|\mathbf{c}\|}.$$

The final estimate of points on the plane for Velodyne LiDAR HDL-64E is given as:

$$\text{predicted points} = \frac{\alpha_\mathrm{h}\alpha_v}{(0.09)(0.4)}.$$

Accordingly, the estimator 815 updates the list of detected planes 810 to include a predicted point estimate for each plane in the list, as shown at 820.

The process 800 proceeds to a filter algorithm, illustrated at 825, which removes suspected false planes from the list of detected planes 810, based on area and predicted point estimates, to arrive at a list of planes that are candidates for merger 840. Filter algorithm 825 begins at 831 with discarding any plane(x) from the list of detected planes 810 that contains fewer laser returns in either the vertical or horizontal direction than a predetermined minimum point criteria. For example, in one embodiment, filter 825 discards any plane whose envelope contains less than 4 laser returns in a vertical direction, or less than 7 laser returns in a horizontal direction. Next, filter 825 proceeds to block 832 applying a second criteria and compares the number of actual laser return points received within the envelope against the number of predicted points estimated for that plane by point prediction estimator 815 (shown at 832). For example, in one embodiment, filter algorithm 825 proceeds by discarding any plane(x) from the list of detected planes 810 where the ratio of the number of predicted points to the number of actual points is greater than or equal to a discard criteria (for example, $\geq 8$). Planes from the list of detected planes 810 that emerge from the filter 825 form the list of candidates for merger 840. Note that the remaining planes in the list of candidates for merger 840 remain sorted according to the used sorting criteria.

In one embodiment, an optional third criteria is applied after the second criteria. Filter algorithm 825 proceeds at block 833 by setting aside any remaining planes in the list of detected planes 810 where the ratio of the number of predicted points to number of actual points is greater than or equal to a "set aside" criteria (for example $\geq 5$). Planes that meet this set aside criteria will be removed from the list of detected planes 810 but not discarded. Instead, set aside planes are placed into a separate list of "set-aside" planes 845 which will be separately considered for merging as described in more detail below. Accordingly, for embodiments that apply this optional third criterion, planes from the list of detected planes 810 that are not discarded or set-aside emerge from the filter 825 as the list of candidates for merger 840.

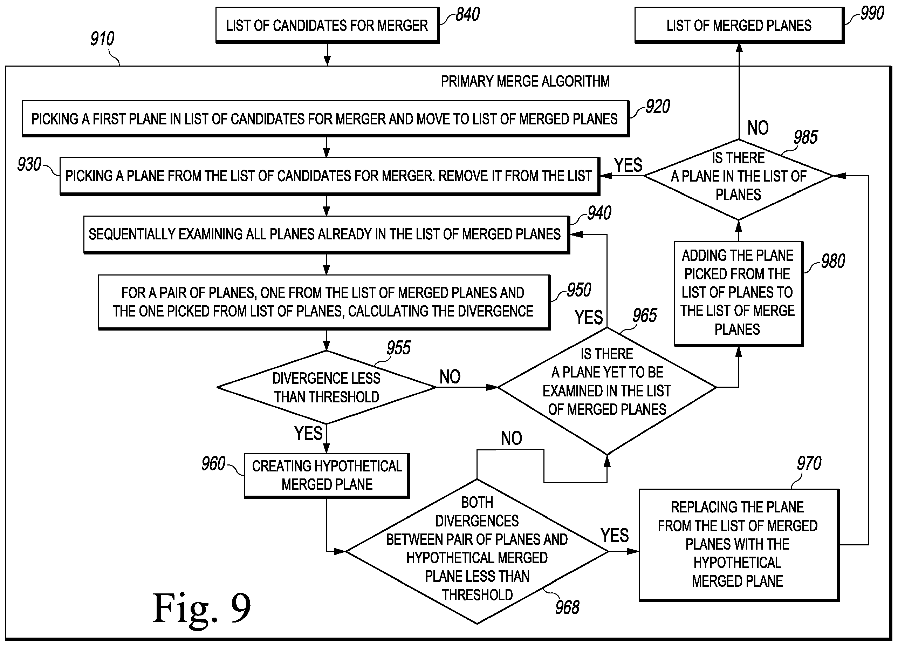

In one embodiment, a process for building a list of merged planes is described in Figure 9, which describes the primary merge algorithm 910. As explained below, the primary merge algorithm 910 iteratively processes every plane in the list of candidates for merger 840 to determine which planes can be merged together, and which planes are likely completely distinct planes that do not require merger.

Primary merge algorithm 910 begins by seeding a list of merged planes 990. At block 920, primary merge algorithm 910 seeds list of merged planes 990 by selecting the largest plane from the list of candidates for merger 840 and moving it into list of merged planes. Since the list of candidates for merger 840 is sorted by area in descending order, the largest plane will be the first plane from that list. In other embodiments, when different sorting criterion is used, primary merge algorithm selects a plane other than the largest plane on the list by selecting the plane according to the sorting criterion that was used to organize the planes.

In each iteration, primary merge algorithm 910 proceeds at block 930 by taking the first (the largest, since the list is ordered by size in descending order) plane from the list of candidates for merger 840 (shown at 930) and removes it from the list. Primary merge algorithm 910 then continues at block 940 by sequentially examining all planes that are already in the list of merged planes 990. For each pair of planes formed by the plane taken from the list of candidates for merger and by a plane from list of merged planes 990, primary merge algorithm 910 proceeds at 950 by calculating the mathematical divergence between the planes. In one embodiment, two planes are considered similar if the divergence between the two planes is less than or equal to a predetermined divergence threshold.

In this embodiment, as explained above, a plane is described by a probability distribution with both a centroid $\hat{c}$ and a covariance matrix $P$. Therefore, the first plane taken from the list of planes is described by centroid $\hat{c}_1$ and covariance matrix $P_1$ and the second plane taken from the list of merged planes is described by centroid $\hat{c}_2$ and covariance matrix $P_2$. As the planes are defined by a centroid and a covariance matrix, the distribution of the points characterizing the planes is assumed to be in a Gaussian distribution as shown by the following equations:

$p_1 = N(\hat{c}_1, P_1)$ for the first plane; and
$p_2 = N(\hat{c}_2, P_2)$ for the second plane.

In other embodiments, other probability distributions are used. Further, when other probability distributions are used, the distributions will use parameters that characterize the plane that may include parameters other than the centroid and covariance matrix.

Merge Algorithm 910 evaluates the similarity of the first plane and second plane by calculating the divergence between the first and second planes. In some implementations, the primary merge algorithm 910 calculates the divergence using Kullback-Leibler divergence. When Kullback-Leibler divergence is used, algorithm 910 calculates the divergence according to the following equation:

$$D(p_1\|p_2) = 0.5\left( \ln\frac{\det(P_2)}{\det(P_1)} + trace(P_2^{-1}P_1) + (\hat{c}_2 - \hat{c}_1)^T P_2^{-1}(\hat{c}_2 - \hat{c}_1) - 3 \right).$$

As the Kullback-Leibler divergence is not symmetric, the reversed divergence is also calculated according to the following equation:

$$D(p_2\|p_1) = 0.5\left( \ln\frac{\det(P_1)}{\det(P_2)} + trace(P_1^{-1}P_2) + (\hat{c}_1 - \hat{c}_2)^T P_1^{-1}(\hat{c}_1 - \hat{c}_2) - 3 \right).$$

The results of the divergence calculations are averaged together to calculate a divergence value for the first and second planes according to the following equation:

$$D = \frac{D(p_1\|p_2) + D(p_2\|p_1)}{2}.$$

Primary merge algorithm 910 proceeds at block 955 by comparing the divergence value D against a threshold value *T*. If $D \leq T$, then the first and second planes are considered similar.

If a pair of planes is not similar, then primary merge algorithm 910 continues at block 965 by returning to block 940 and sequentially examining other planes in the list of merged planes and proceeds to the consideration of the next pair. When the divergence between two planes is below a threshold value, primary merge algorithm 910 proceeds at block 960 with creating a hypothetical merged plane.

Primary merge algorithm 910 creates a hypothetical merged plane from two planes where the divergence between the two planes is less than a threshold value, and by mathematical computation determines a probabilistic representation that includes, but is not limited to, the hypothetical merged plane's centroid, normal vector, plane thickness, covariance matrix, and the like.

In this implementation, the mathematical computations determine a new merged centroid and covariance matrix based on the points in the first and second planes. First plane $\Pi_1$ includes $n_1$ points, where $\Pi_1 = \{\pi_{1,j}\}_{j=1}^{n_1}.$ Second

plane $\Pi_2$ includes $n_2$ points, where $\Pi_2 = \left\{ \pi_{2,k} \right\}_{k=1}^{n_2}$. The merged plane $\Pi_M$ includes the $n_1 + n_2$ points in first plane $\Pi_1$ and second plane $\Pi_2$. The centroid $\hat{c}_M$ and the covariance matrix $P_M$ for the merged plane $\Pi_M$ is defined by the following equations:

$$\hat{c}_M = \frac{1}{n_1 + n_2} \sum_{l=1}^{n_1 + n_2} \pi_{M,l} \, ,$$

$$P_M = \frac{1}{(n_1 + n_2) - 1} \sum_{l=1}^{n_1 + n_2} \left( \pi_{M,l} - \hat{c}_M \right) \left( \pi_{M,l} - \hat{c}_M \right)^T \, .$$

In another embodiment, the merged plane parameters are estimated from the parameters, such as $\hat{c}_M$ and $P_M$, of the two planes being merged without using the original points of the two planes being merged.

When the hypothetical merged plane has been created, the merge algorithm 910 computes divergences between both original planes and the merged plane and proceeds at 968. At 968, merge algorithm 910 compares both divergences against a threshold value. In certain embodiments, the threshold value used at 968 is smaller than the threshold value used at 955. When both the calculated divergences are less than the threshold value, primary merge algorithm 910 proceeds at 970 by replacing the first plane from the pair of compared planes in the list of merged planes with the hypothetical merged plane. Primary merge algorithm 910 then returns to block 930 to select a different non-merged plane from the list of candidates for merger 840. When the calculated divergence is greater than the threshold, merge algorithm 910 proceeds at block 965 by determining whether there are other planes yet to be examined in list of merged planes 990. If there are other planes, primary merge algorithm 910 leaves the first plane in the list of merged planes 990 and the iterative algorithm continues by checking whether there is still at least one plane that has to be processed at step 985, returning to step 930 and picking another plane from the list of candidates for merger 840. When a given plane from the list of candidates for merger 840 is tested against every plane in the merged plane list and the divergence of each test is greater than the respective threshold, then primary merge algorithm 980 at block 980 proceeds by adding the given plane to the list of merged planes 990 as a distinct plane, and removes the given plane from the list of candidates for merger 840. Such a plane is added to the list of merged planes because it may represent an independent distinct plane in the real world scene rather than a fragment of another plane already in the merged plane list 990. Merge algorithm 910 proceeds at block 985 by continuing until all the planes from the list of candidates for merger 840 are either merged into a plane in the merged plane list 990, or added to the merged plane list 990 as a distinct plane.

In one embodiment, assuming that no optional list of "set-aside" planes was generated, then the output from the primary merge algorithm 910 represents the final list of planes. In one alternate embodiment, to arrive at a final list of planes, those planes from the merged plane list that have an area less than or equal to a minimum area threshold (such as 0.1 m$^2$, for example) are discarded. The final list of planes may then optionally be sorted by area.

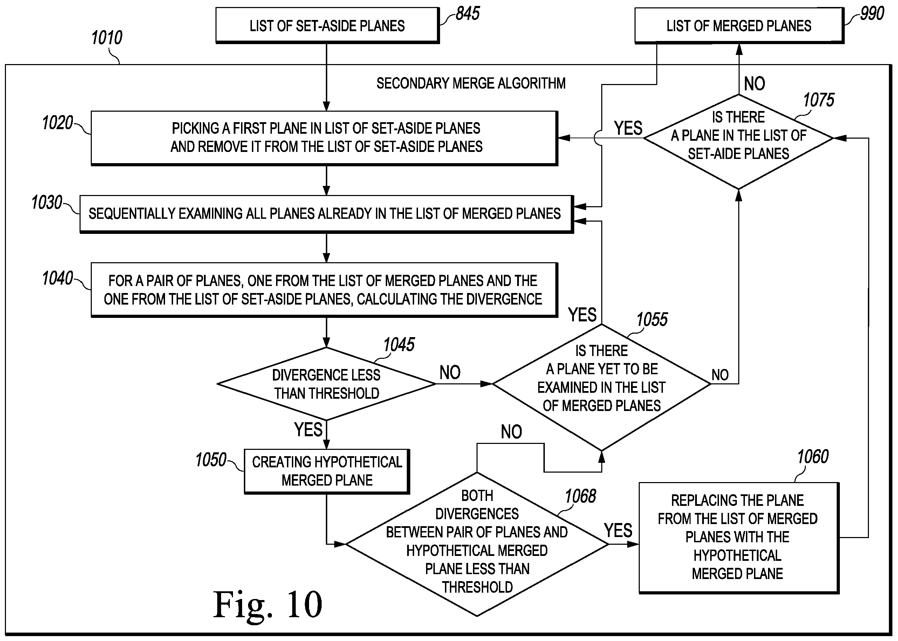

In one embodiment, where the optional list of "set-aside" planes was generated, a secondary merge algorithm 1010 is applied to determine whether any of the "set-aside" planes can be merged with any plane from the list of merged planes 990 generated by the primary merge algorithm 910. This process is described in Figure 10.

Secondary merge algorithm 1010 attempts to merge planes from the list of set-aside planes 845 with planes in the list of merged planes 990. Planes in the list of set-aside planes that are not "loosely similar" to any plane in the list of merged planes are discarded.

In each iteration, the secondary merge algorithm 1010 begins at block 1020 by taking the first plane from the list of set-aside planes 845 and removing it from list 845. Secondary merge algorithm 1010 then continues at block 1030 by sequentially examining the planes that are already in the list of merged planes 990. Secondary merge algorithm 1010 then proceeds at block 1040 by calculating the divergence for a pair of planes formed by the plane taken from the list of set-aside planes and by a plane from the list of merged planes 990.

Secondary merge algorithm 1010 proceeds at block 1045, if the calculated divergence for the pair of planes exceeds a predefined threshold, the pair of planes is not similar and secondary merge algorithm 1010 proceeds to block 1055 and determines if there are other planes available for comparison in list of merged planes 990. When there are still planes available for comparison in list of merged planes 990, secondary merge algorithm returns to block 1030 by sequentially examining other planes in the list of merged planes. When the calculated divergence is below the predefined threshold, the algorithm 1010 proceeds at block 1050 by creating a hypothetical merged plane and, by mathematical computation, determining the centroid and covariance matrix, in conjunction with other characteristic parameters, of the hypothetical merged plane.

The secondary merge algorithm 1010 then calculates divergences between both original planes and the hypothetical merged plane. Secondary merge algorithm 1010 proceeds at block 1058 by checking whether both divergences are below a given threshold. In certain embodiments, the threshold at 1058 is smaller than the threshold used at block 1045. If both divergences are less than the threshold, the secondary merge algorithm 1010 continues at 1060 by replacing the first plane from the pair of planes with the hypothetical merged plane in the list of merged planes 990 and the method returns to block 1020, where another candidate for merger is picked from the list of set-aside planes, 845. If either of the calculated diverges is greater than the threshold tested at 1058, secondary merge algorithm 1010 checks, at 1055, whether there are still planes in list of merged planes 990 to be compared to the selected plane. If there are further planes in list of merged planes 990 to compare against the selected plane, secondary merge algorithm 1010 proceeds by returning to 1030. When a second plane, from the pair, picked from the list of set-aside planes is tested against every plane in the merged plane list and the calculated divergence values fail to be below the predefined threshold, the second plane is discarded. Secondary merge algorithm 1010 proceeds at 1075 by iteratively processing the list of set aside planes 845 until every plane in that list is either merged into the list of merged planes 990, or discarded.

For this embodiment, the resulting list of merged planes 990 that is output from the secondary merge algorithm 1010 represents the final list of planes. In another alternate embodiment, to arrive at a final list of planes, those planes emerging from secondary algorithm 1010 that have an area less than or equal to a minimum area threshold (such as 0.1 m2, for example) are discarded. The final list of planes may then be optionally sorted by area or other desired criteria.

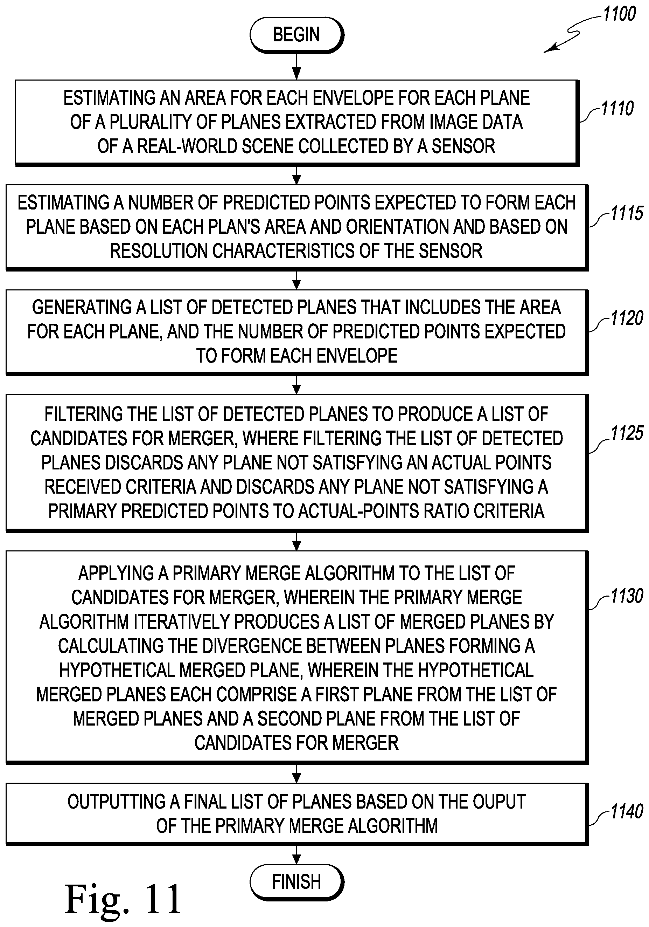

Figure 11 is a flow chart illustrating one embodiment of a method 1100 for merging planes as detailed above. The method 1100 begins at block 1110 by estimating an area for each plane of a plurality of planes extracted from data of a real-world scene collected by an sensor. In one embodiment, the area of a plane is estimated using the envelope model discussed above and the area for a plane's envelope is calculated from multiplying the square roots of the two larger eigenvalues of the plane's covariance matrix.

The method 1100 proceeds to block 1115 with estimating a number of predicted points expected to form each plane based on its area and orientation, and based on resolution characteristics of the sensor. That is, for a given sensor, a given number of return points can be estimated for a plane of a given size and relative orientation with respect to the sensor. One means for calculating predicted point is provided above.

The method 1100 proceeds to block 1120 with generating a list of detected planes that includes, but is not limited to, the area of each plane, and the number of predicted points expected to form the plane. The planes in list of detected planes are ordered by plane area in descending order, or other desired criteria set by a user, as described above.

The method 1100 proceeds to block 1125 with filtering the list of detected planes to produce a list of candidates for merger, where filtering the list of detected planes discards any plane not satisfying an actual points received criterion and discards any plane not satisfying a primary predicted-points to actual-points ratio criterion. In one embodiment, filtering the list of detected planes further identifies a list of set-aside planes that satisfy the primary predicted-points to actual-points ratio criterion but do not satisfy a secondary predicted-points to actual-points ratio. These planes are set-aside for later processing to see if they can be merged with planes formed by the first merging algorithm. If they cannot be merged, they are discarded. Planes included in the list of set-aside planes are not also included in the list of candidates for merger.

The method 1100 proceeds to block 1130 with applying a primary merge algorithm to the list of candidates for merger, wherein the primary merge algorithm iteratively produces a list of merged planes by calculating the divergence between planes forming a hypothetical merged plane, wherein the hypothetical merged planes each comprise a first plane from the list of merged planes and a second plane from the list of candidates for merger. As discussed above, if all calculated divergences between planes forming the hypothetical merged plane and divergences between the hypothetical merged plane and original planes are below respective predefined thresholds, the primary merge algorithm replaces the first plane in the list of merged planes with the hypothetical merged plane, and removes the second plane from the list of candidates for merger. When at least one calculated divergence is not below a predefined threshold, the plane picked from the list of candidates for merger to the list of merged planes as a distinct plane.

In one embodiment, when the list of set-aside planes is optionally generated at 1125, the method 1100 further optionally includes applying a secondary merge algorithm using the list of candidates for merger and the list of set-aside planes. The secondary merge algorithm tests hypothetical merged planes that each comprises of a first plane from the list of merged planes and a second plane from the list of set-aside planes by comparing the divergence between the first plane and the second plane and among both the first and the second plane and the hypothetical merged plane against a predefined respective thresholds. When all the divergence values are below given respective thresholds, the planes are retained and the hypothetical merged plane replaces the plane from the list of merged planes while the plane from the list of set-aside planes is discarded. In certain embodiments, all planes from the list of set-aside planes that fail to have a all divergence values less than the respective threshold are discarded.

The method 1100 proceeds to block 1140 with outputting a final list of planes based on the output of the primary merge algorithm. In one embodiment, prior to outputting the final list of planes, the list is filtered to remove any plane that has an area not satisfying a minimum area threshold (such as 0.1 m2, for example). In one embodiment, the final list of planes is sorted by area. In other embodiments, different sorting criteria is used to sort the final list of planes. In one embodiment, the final list of planes is stored to a physical data storage device such as, but not limited to a drive or memory.

The method described above thus can be viewed as performing two separate tasks. One removes false positives which are planes discarded because they are defined by only a small number of points compared to the number of points we would expect. The other performs the merging of planes. The two tasks can operate independently and in alternate embodiments, either can be skipped. For example, the primary merge algorithm in block 1130 can, in one embodiment, operate on a list of detected planes that has not been filtered based on predicted point estimates.

*Navigation Direction*

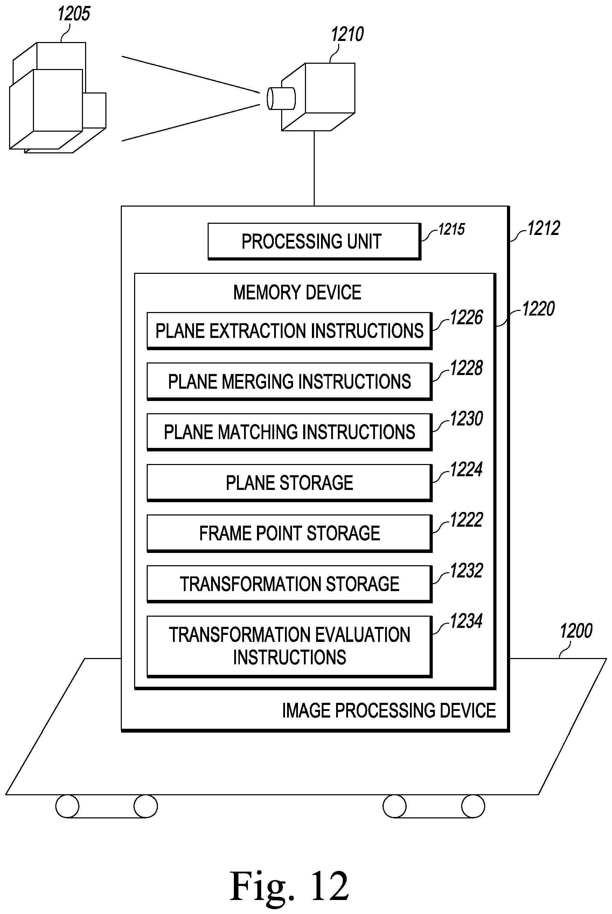

In one embodiment, the transformation hypothesis is applied to the practical field of self navigating vehicles. Figure 12 is a block diagram illustrating one embodiment of the present invention. In this embodiment, a self navigating vehicle 1200 includes a sensor 1210 and an processing device 1212. The processing device 1212 includes a processing unit 1215 and a data storage device 1220 that implements the processes described above and is similar to system 100 in Fig. 1.

In certain embodiments, sensor 1210 transmits captured data to processing device 1212, where upon processing 1212 device stores the data in a frame points storage 1222 on data storage device 1220. Data storage device 1220 also stores computer instructions that direct processing unit 1215 to calculate a transformation hypothesis from the data stored in frame point storage 1222. Data storage device 1220 stores a plane extracting instructions 1226, a plane merging instructions 1228, a plane matching instructions 1230, and transformation evaluation instructions 1234. Plane extracting instructions 1226 direct processing unit 1215 to extract probability distributions representing identified planes from frame points stored in frame points storage 1222 and store them in plane storage 1224. Plane merging instructions 1228 direct processing unit 1215 to iteratively compare the identified planes in a frame of data and merge frames that are similar to one another as explained above in relation to primary and secondary merge algorithms 910 and 1010. Plane matching instructions 1230 instruct processing unit 1215 to compare planes in different frames of data, using the transformation evaluation instructions 1234, calculate a transformation hypothesis based on the divergence between planes in the frames, and evaluate the quality of the transformation hypothesis as described in relation to processes 600 and 700 in Figs. 6 and 7. After processing unit 1215 determines the transformation hypothesis and evaluates its quality, processing unit 1215 stores the transformation hypothesis in transformation storage 1232 on data storage device 1220.

In one embodiment, in operation, sensor 1210 captures a first frame of a real world scene 1205. Vehicle 1200 subsequently travels to a second location and sensor 1210 captures a second frame of real-world scene 1205. In one implementation, vehicle 1200 has at least approximate knowledge of its own coordinates with respect to a first frame of the real world scene 1205 as it captures the first frame of data. From the first and second frames of data, processing unit 1215 calculates and stores, on a data storage device 1220, a transformation hypothesis. In one embodiment, vehicle 1200 then determines coordinates for its new position by applying the transformation hypothesis stored on data storage device 1220 to its coordinates in the navigation frame. The difference in coordinates is also used to determine vehicle parameters such as, but not limited to, vehicle 1200's velocity (when time between data capture is known), heading, and orientation (i.e., yaw, pitch, and roll). In another embodiment, vehicle 1200 applies the transformation hypothesis to known obstacles previously identified in the first frame to estimate the relative position of those objects at its new location, even when those objects do not appear in the second frame. As this suggests, it is not necessary for the two frames used for determining the hypotheses to be sequentially taken. frames taken minutes, hours, days or years apart are also processed against current frames as long as the frames contain at least overlapping data associated with a relatively static scene 1205. Further, it is not necessary for the data to be captured by the same sensor 1210. Data captured from multiple sensors are used as long as they implement the same transformation when capturing the scene into a projection. Also, the two projections for which the plane matching is desired do not have to be captured by the same sensor at two times, but equivalently by two or more devices at the same time or some may be generated from *a priori* known data.

In another embodiment, in operation, sensor 1210 captures a frame of data associated with a real world scene 1205. Using *a priori* given map of planes, the processor 1215 calculates the divergence between planes in the frame of data and planes in the map. The hypothesis then defines the position of the vehicle 1200 in the navigation reference frame aligned with the map.

In another embodiment, the transformation hypothesis is readily applied to the field of automated map building using vehicle 1200 or to obtain the matching planes for triangulation or reprojection purposes, such as for 3D stereoscopic reprojections. For example, with alternate embodiments of the present invention, static planes identified in one data frame are correlated to similar planes identified in a second data frame in order to combine the two frames into a third frame that preserves information regarding the relative position of objects in the two frames. By repeating this process, as vehicle 1200 travels, a map is developed and saved into memory 1220 that can serve various purposes, it might be used, for example, to identify pathways that can be traversed without hindrance from obstacles or it might serve for navigation of other vehicles, etc. Similarly, in other embodiments, the processing unit 1215 applies plane matching using divergence processes to create a mosaic frame in memory 1220 from separate captured frames, by overlapping correlating planes from a first and second captured frames.

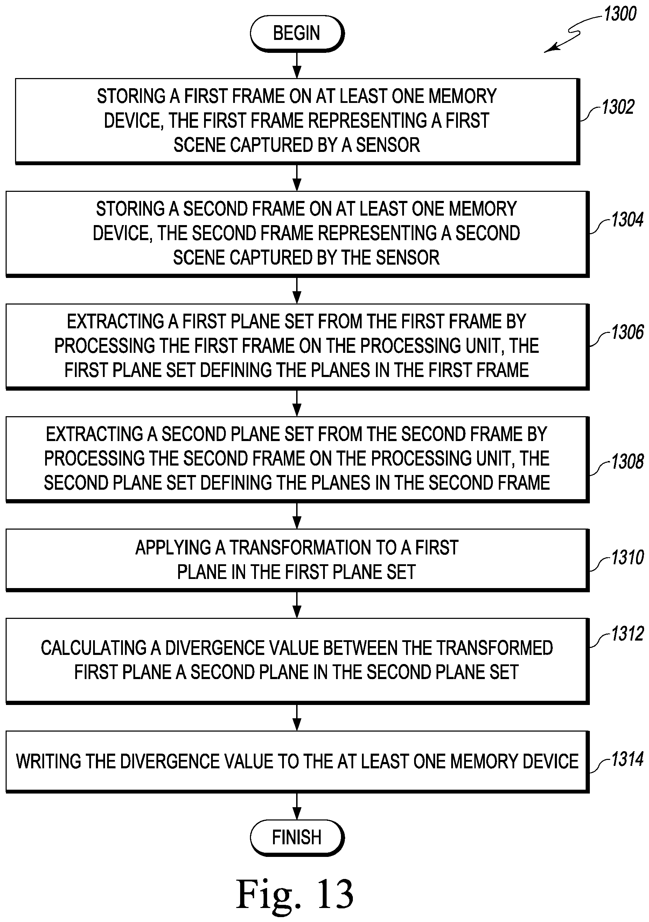

Figure 13 is a flow diagram illustrating a method 1300 for determining plane similarity according to one embodiment. Method 1300 begins at 1302 with storing a first frame on at least one memory device, the first frame representing a first scene captured by a sensor. The method 1300 proceeds at 1304 with storing a second frame on the at least one memory device, the second frame representing a second scene captured by the sensor. The method proceeds at 1306 with extracting a first plane set from the first frame by processing the first frame on a processing unit, the first plane set defining the planes in the first frame as probability distributions. The method proceeds at 1308 with extracting a second plane set from the second frame by processing the second frame on the processing unit, the second plane set defining the planes in the second frame as probability distributions.

The method 1300 proceeds at 1310 with applying a transformation hypothesis to a first plane in the first plane set. Method 1300 proceeds at 1312 with calculating a divergence value between the transformed first plane and a second plane in the second plane set. The method proceeds at 1314 with writing the divergence value to the at least one memory device. In at least one embodiment, the divergence is used to further calculate a transformation hypothesis. Alternatively, the divergence is used to evaluate the quality of the transformation hypothesis.

Several means of hardware are available to implement the systems and methods of the current invention as discussed in this specification. These means of hardware include, but are not limited to, digital computer systems, microprocessors, general purpose computers, programmable controllers and field programmable gate arrays. Therefore other embodiments of the present invention are program instructions resident on computer readable storage media which when implemented by such devices, enable them to implement embodiments of the present invention. Computer readable media include any form of physical computer data storage hardware, including but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions and code include, but are not limited to computer-executable instructions executed by computer system processors and hardware description languages such as Very High Speed Integrated Circuit (VHSIC) Hardware Description Language (VHDL).

## EXAMPLE EMBODIMENTS

Example 1 includes a system for determining plane similarity, the system comprising a sensor configured to acquire a plurality of frames of data; and a processing unit coupled to the sensor, the processing unit configured to process the plurality of frames of data, wherein the processing unit is further configured to store the plurality of frames of data on at least one memory device; read a first frame of data from the plurality of frames stored on the at least one memory device; read a second frame of data from the plurality of frames stored on the at least one memory device; extract a first plane from the first frame of data; extract a second plane from the second frame of data; and calculate a divergence to measure a similarity between the first plane and the second plane.

Example 2 includes the system of Example 1, wherein the processing unit extracts the first plane by creating a statistical representation of the first plane.

Example 3 includes the system of Example 2, wherein the statistical representation comprises a covariance matrix and a centroid representing a three dimensional cluster of points.

Example 4 includes the system of any of Examples 1-3, wherein the processing unit compares the divergence against a threshold value.

Example 5 includes the system of any of Examples 1-4, wherein the divergence measure is calculated using at least one of a Kullback-Leibler divergence; a Jensen-Shanon divergence; a mutual information measure; a correlation measure; a Bhattacharyya distance; and a Hellinger distance.

Example 6 includes the system of any of Examples 1-5, wherein the processing unit translates and rotates either the first frame or the second frame prior to calculating the divergence.

Example 7 includes the system of any of Examples 1-6, wherein the divergence compares the first and second planes in directions that include at least one of an eigenvector of a covariance matrix; an average normal vector; a normal vector; and a smallest eigenvector.

Example 8 includes the system of any of Examples 1-7, further comprising applying a primary merge algorithm to the planes in the first plane set, wherein the primary merge algorithm iteratively merges the planes by comparing the divergence between two planes against a threshold value, wherein the two planes are in the first plane set; and applying the primary merge algorithm to the planes in the second plane set.

Example 9 includes a processing device, the processing device comprising a sensor configured to acquire a plurality of frames of data; and a processing unit coupled to the sensor, the processing unit configured to process the frames of data, wherein the processing unit is further configured to extract a first plane set from a first frame in the plurality of frames of data; extract a second plane set from a second frame in the plurality of frames of data; identify a transformation hypothesis; create a transformed plane by applying the transformation hypothesis to a first plane in the first plane set; and determine a divergence value by applying a divergence formula to the transformed plane and a second plane in the second plane set.

Example 10 includes the device of Example 9, wherein the processor is further configured to create a transformed plane set by applying the transformation hypothesis to a plurality of planes in the first plane set; and determine a set of divergences by calculating the divergence between the transformed plane set and at least one plane in the second plane set.

Example 11 includes the device of Example 10, wherein the processor is further configured to evaluate a quality measure for the transformation hypothesis by compiling the values in the set of divergences.

Example 12 includes the device of Example 11, wherein the processor is further configured to determine whether to identify a new transformation hypothesis based on the quality measure.

Example 13 includes the device of any of Examples 11-12, wherein the processor evaluates the quality measure using at least one of summing the values in the set of divergences; averaging the values in the set of divergences; multiplying the values in the set of divergences; weighted summing of the values in the set of divergences; weighted averaging of the values in the set of divergences; and weighted multiplying of the values in the set of divergences.

Example 14 includes the device of any of Examples 9-13, wherein the processor is further configured to compare the divergence to a threshold; and determine whether the first plane matches the second plane based on the threshold.

Example 15 includes the device of any of Examples 9-14, wherein the processor is further configured to apply a primary merge algorithm to the planes in the first plane set, wherein the primary merge algorithm iteratively merges the planes by comparing the divergence between two planes against a threshold value, wherein the two planes are in the first plane set; and apply the primary merge algorithm to the planes in the second plane set.

Example 16 includes a system, the system comprising a processor coupled to a sensor, the sensor collecting frames of data representing real-world scenes; at least one data storage device having stored thereon a first plane set extracted from data in a first frame and a second plane set extracted from data in a second frame; wherein the processor forms a first merged plane set from the first plane set and a second merged plane set from the second plane set by applying a primary merge algorithm that iteratively produces merged planes by calculating a divergence between planes in a plane set and comparing the divergence against a threshold, wherein the merged planes comprise at least one plane from the plane set; wherein the processor applies a transformation hypothesis to a first plane in the first merged plane set; and wherein the processor calculates a divergence value between the transformed first plane and a second plane in the second merged plane set.

Example 17 includes the system of Example 16, wherein the processor is further configured to create a transformed plane set by applying the transformation hypothesis to a plurality of planes in the first merged plane set; and determine a set of divergences by calculating the divergence between the transformed plane set and a plurality of planes in the second merged plane set.

Example 18 includes the system of Example 17, wherein the processor is further configured to evaluate a quality measure for the transformation hypothesis by compiling the values in the set of divergences.

Example 19 includes the system of any of Examples 16-18, wherein the processor is further configured to compare the divergence to a threshold; and determine whether the first plane matches the second plane based on the threshold.

Example 20 includes the system of any of Examples 16-19, wherein the processor is further configured to use the transformation hypothesis to determine the current position of the vehicle.

Although specific embodiments have been illustrated and described herein, it will be appreciated by those of ordinary skill in the art that any arrangement, which is calculated to achieve the same purpose, may be substituted for the specific embodiments shown. Further, elements of the various embodiments described above can be combined to form yet other embodiments. Therefore, it is manifestly intended that this invention be limited only by the claims and the equivalents thereof.

**Claims**

1.  A system for determining plane similarity, the system comprising:

    a sensor (110) configured to capture a scene and acquire a plurality of frames of two or three dimensional data representing the scene; and
    a processing unit (115) coupled to the sensor (110), the processing unit (115) configured to process the plurality of frames of data, wherein the processing unit (115) is further configured to

    store the plurality of frames of data on at least one memory device (120);
    read a first frame of data from the plurality of frames stored on the at least one memory device (120);
    read a second frame of data from the plurality of frames stored on the at least one memory device (120);
    extract a first plane from the first frame of data;
    extract a second plane from the second frame of data; and
    calculate a divergence between the first plane and the second plane, wherein the divergence is a statistical distance between probability distribution representations of the first plane and the second plane, and wherein the probability distribution representations of the first plane and the second plane represent probability distributions of points comprised in the first plane and the second plane, the points **characterized by** normal vectors and orthogonal distance that are respectively acquired from the extracted first plane and the extracted second plane.

2.  The system of claim 1, wherein the first plane and the second plane may each be represented by a covariance matrix and a centroid.

3.  The system of claim 1, wherein the processing unit (115) compares the divergence against a threshold value.

4.  The system of claim 1, wherein the divergence is calculated using at least one of:

    a Kullback-Leibler divergence;
    a Jensen-Shanon divergence;
    a mutual information measure;
    a correlation measure;
    a Bhattacharyya distance; and
    a Hellinger distance.

5.  The system of claim 1, wherein the processing unit (115) translates and rotates either the first frame or the second frame prior to calculating the divergence.

6.  The system of claim 1, wherein calculate the divergence comprises compare densities of points on the first plane and on the second plane in directions that include at least one of:

    an eigenvector of a covariance matrix;
    an average normal vector;
    a normal vector of one of the first plane and the second plane; and
    a smallest eigenvector associated with the smallest eigenvalue of the covariance matrix.

**7.** The system of claim 1, further comprising:

applying a primary merge algorithm (910) to the planes in a first plane set, wherein the first plane set is extracted from the first frame, wherein the primary merge algorithm iteratively processes the planes by comparing the divergence between two planes against a threshold value, wherein the two planes are in the first plane set, and wherein when the divergence between the two planes is less than or equal to the threshold value the primary merge algorithm merges the two planes together; and

applying the primary merge algorithm (910) to the planes in a second plane set, wherein the second plane set is extracted from the second frame.

**8.** A processing device (1212), the processing device (1212) comprising:

a sensor (1210) configured to capture a scene and acquire a plurality of frames of three dimensional data representing the scene; and

a processing unit (1215) coupled to the sensor, the processing unit (1215) configured to process the frames of data, wherein the processing unit (1215) is further configured to

extract a first plane set from a first frame in the plurality of frames of data;

extract a second plane set from a second frame in the plurality of frames of data;

identify a transformation hypothesis, wherein the transformation hypothesis represents the movement of the sensor between acquiring the first frame and second frame;

create a transformed plane by applying the transformation hypothesis to a first plane in the first plane set; and

determine a divergence value by applying a divergence formula to the transformed plane and a second plane in the second plane set, wherein the divergence determines a statistical distance between probability distribution representations of the first plane and the second plane, wherein the probability distribution representations of the first plane and the second plane represent probability distributions of points comprised in the first plane and the second plane, the points **characterized by** normal vectors and orthogonal distance that are respectively acquired from the extracted first plane and the extracted second plane.

**9.** The device of claim 8, wherein the processing unit (1215) is further configured to:

create a transformed plane set by applying the transformation hypothesis to a plurality of planes in the first plane set; and

determine a set of divergences by calculating the divergence between the transformed plane set and at least one plane in the second plane set.

**Patentansprüche**

**1.** System zum Bestimmen der Ähnlichkeit von Ebenen, wobei das System umfasst:

einen Sensor (110), der so konfiguriert ist, dass er eine Szene aufnimmt und eine Mehrzahl von Rahmen von zwei- oder dreidimensionalen Daten erfasst, welche die Szene darstellen; und

eine Verarbeitungseinheit (115), die mit dem Sensor (110) gekoppelt ist, wobei die Verarbeitungseinheit (115) zum Verarbeiten der Mehrzahl von Datenrahmen konfiguriert ist, wobei die Verarbeitungseinheit (115) ferner konfiguriert ist zum:

Speichern der Mehrzahl von Datenrahmen in mindestens einer Speichervorrichtung (120);

Auslesen eines ersten Datenrahmens aus der Mehrzahl von Rahmen, die in der mindestens einen Speichervorrichtung (120) gespeichert sind;

Auslesen eines zweiten Datenrahmens aus der Mehrzahl von Rahmen, die in der mindestens einen Speichervorrichtung (120) gespeichert sind;

Extrahieren einer ersten Ebene aus dem ersten Datenrahmen;

Extrahieren einer zweiten Ebene aus dem zweiten Datenrahmen; und,

Berechnen einer Divergenz zwischen der ersten Ebene und der zweiten Ebene, wobei die Divergenz eine statistische Distanz zwischen Wahrscheinlichkeitsverteilungsdarstellungen der ersten Ebene und der zweiten Ebene ist, und

wobei die Wahrscheinlichkeitsverteilungsdarstellungen der ersten Ebene und der zweiten Ebene Wahrscheinlichkeitsverteilungen von Punkten darstellen, die in der ersten und der zweiten Ebene enthalten sind, wobei die Punkte durch Normalenvektoren und eine orthogonale Distanz gekennzeichnet sind, die aus der extrahierten ersten Ebene bzw. der extrahierten zweiten Ebene erfasst werden.

2. System nach Anspruch 1, wobei die erste Ebene und die zweite Ebene jeweils durch eine Kovarianzmatrix und einen Schwerpunkt dargestellt werden können.

3. System nach Anspruch 1, wobei die Verarbeitungseinheit (115) die Divergenz mit einem Schwellenwert vergleicht.

4. System nach Anspruch 1, wobei die Divergenz unter Verwendung mindestens eines berechnet wird von:

    einer Kullback-Leibler-Divergenz;
    einer Jensen-Shanon-Divergenz;
    einem Transinformationsmaß;
    einem Korrelationsmaß;
    einer Bhattacharyya-Distanz; und
    einer Hellinger-Distanz.

5. System nach Anspruch 1, wobei die Verarbeitungseinheit (115) entweder den ersten Rahmen oder den zweiten Rahmen vor dem Berechnen der Divergenz verschiebt oder dreht.

6. System nach Anspruch 1, wobei das Berechnen der Divergenz ein Vergleichen von Dichten von Punkten auf der ersten Ebene und auf der zweiten Ebene in Richtungen umfasst, die mindestens eines umfassen von:

    einem Eigenvektor einer Kovarianzmatrix;
    einem mittleren Normalenvektor;
    einem Normalenvektor einer der ersten Ebene und der zweiten Ebene; und
    einem kleinsten Eigenvektor, der mit dem kleinsten Eigenwert der Kovarianzmatrix assoziiert ist.

7. System nach Anspruch 1, ferner umfassend:

    Anwenden eines primären Merge-Algorithmus (910) auf die Ebenen in einem ersten Ebenensatz, wobei der erste Ebenensatz aus dem ersten Rahmen extrahiert wird, wobei der primäre Merge-Algorithmus die Ebenen durch Vergleichen der Divergenz zwischen zwei Ebenen mit einem Schwellenwert iterativ verarbeitet, wobei die beiden Ebenen im ersten Ebenensatz sind, und wobei, wenn die Divergenz zwischen den beiden Ebenen kleiner als oder gleich wie der Schwellenwert ist, der primäre Merge-Algorithmus die beiden Ebenen mergt; und
    Anwenden des primären Merge-Algorithmus (910) auf die Ebenen in einem zweiten Ebenensatz, wobei der zweite Ebenensatz aus dem zweiten Rahmen extrahiert wird.

8. Verarbeitungsvorrichtung (1212), wobei die Verarbeitungsvorrichtung (1212) umfasst:

    einen Sensor (1210), der so konfiguriert ist, dass er eine Szene aufnimmt und eine Mehrzahl von Rahmen von dreidimensionalen Daten erfasst, welche die Szene darstellen; und
    eine Verarbeitungseinheit (1215), die mit dem Sensor gekoppelt ist, wobei die Verarbeitungseinheit (1215) zum Verarbeiten der Datenrahmen konfiguriert ist, wobei die Verarbeitungseinheit (1215) ferner konfiguriert ist zum:

        Extrahieren eines ersten Ebenensatzes aus einem ersten Rahmen in der Mehrzahl von Datenrahmen;
        Extrahieren eines zweiten Ebenensatzes aus einem zweiten Rahmen in der Mehrzahl von Datenrahmen;
        Identifizieren einer Transformationshypothese, wobei die Transformationshypothese die Bewegung des Sensors zwischen dem Erfassen des ersten Rahmens und des zweiten Rahmens darstellt;
        Erstellen einer transformierten Ebene durch Anwenden der Transformationshypothese auf eine erste Ebene im ersten Ebenensatz; und
        Bestimmen eines Divergenzwerts durch Anwenden einer Divergenzformel auf die transformierte Ebene und eine zweite Ebene im zweiten Ebenensatz, wobei die Divergenz eine statistische Distanz zwischen Wahrscheinlichkeitsverteilungsdarstellungen der ersten Ebene und der zweiten Ebene bestimmt, wobei die Wahrscheinlichkeitsverteilungsdarstellungen der ersten Ebene und der zweiten Ebene Wahrscheinlichkeitsverteilungen von Punkten darstellen, die in der ersten und der zweiten Ebene enthalten sind, wobei die Punkte durch Normalenvektoren und eine orthogonale Distanz gekennzeichnet sind, die aus der extrahierten ersten Ebene bzw. der extrahierten zweiten Ebene erfasst werden.

9. Vorrichtung nach Anspruch 8, wobei die Verarbeitungseinheit (1215) ferner konfiguriert ist zum:

Erstellen eines Satzes transformierter Ebenen durch Anwenden der Transformationshypothese auf eine Mehrzahl von Ebenen im ersten Ebenensatz; und
Bestimmen eines Satzes von Divergenzen durch Berechnen der Divergenz zwischen dem Satz transformierter Ebenen und mindestens einer Ebene im zweiten Ebenensatz.

**Revendications**

1. Système pour déterminer une similarité de plan, le système comprenant :

un capteur (110) configuré pour capturer une scène et
acquérir une pluralité de trames de données bidimensionnelles ou tridimensionnelles représentant la scène ; et
une unité de traitement (115) couplée au capteur (110), l'unité de traitement (115) étant configurée pour traiter la pluralité de trames de données, où l'unité de traitement (115) est en outre configurée pour :

stocker la pluralité de trames de données sur au moins un dispositif de mémoire (120) ;
lire une première trame de données de la pluralité de trames stockées sur l'au moins un dispositif de mémoire (120) ;
lire une seconde trame de données de la pluralité de trames stockées sur l'au moins un dispositif de mémoire (120) ;
extraire un premier plan de la première trame de données ;
extraire un second plan de la seconde trame de données ; et
calculer une divergence entre le premier plan et le second plan, où la divergence est une distance statistique entre les représentations de distribution de probabilités du premier plan et du second plan, et où les représentations de distribution de probabilités du premier plan et du second plan représentent des distributions de probabilités de points compris dans le premier plan et le second plan, les points étant **caractérisés par** des vecteurs normaux et une distance orthogonale, lesquels sont respectivement acquis à partir du premier plan extrait et du second plan extrait.

2. Système selon la revendication 1, dans lequel le premier plan et le second plan peuvent être représentés chacun par une matrice de covariance et un centroïde.

3. Système selon la revendication 1, dans lequel l'unité de traitement (115) compare la divergence à une valeur seuil.

4. Système selon la revendication 1, dans lequel la divergence est calculée en utilisant au moins l'un des éléments suivants :

une divergence de Kullback-Leibler ;
une divergence de Jensen-Shanon ;
une mesure d'information mutuelle ;
une mesure de corrélation ;
une distance de Bhattacharyya ; et
une distance de Hellinger.

5. Système selon la revendication 1, dans lequel l'unité de traitement (115) traduit et fait tourner soit la première trame, soit la seconde trame avant de calculer la divergence.

6. Système selon la revendication 1, dans lequel calculer la divergence comprend de comparer des densités de points sur le premier plan et sur le second plan dans des directions qui comprennent au moins l'un des éléments suivants :

un vecteur propre d'une matrice de covariance ;
un vecteur normal moyen ;
un vecteur normal d'un plan parmi le premier plan et le second plan ; et
le plus petit vecteur propre associé à la plus petite valeur propre de la matrice de covariance.

**7.** Système selon la revendication 1, comprenant en outre les étapes suivantes :

appliquer un algorithme de fusion primaire (910) aux plans dans un premier ensemble de plans, où le premier ensemble de plans est extrait de la première trame, où l'algorithme de fusion primaire traite de manière itérative les plans en comparant la divergence entre deux plans par rapport à une valeur seuil, où les deux plans sont dans le premier ensemble de plans, et où, lorsque la divergence entre les deux plans est inférieure ou égale à la valeur seuil, l'algorithme de fusion primaire fusionne ensemble les deux plans ; et
appliquer l'algorithme de fusion primaire (910) aux plans dans un second ensemble de plans, où le second ensemble de plans est extrait de la seconde trame.

**8.** Dispositif de traitement (1212), le dispositif de traitement (1212) comprenant :

un capteur (1210) configuré pour capturer une scène et acquérir une pluralité de trames de données tridimensionnelles représentant la scène ; et
une unité de traitement (1215) couplée au capteur, l'unité de traitement (1215) étant configurée pour traiter les trames de données, où l'unité de traitement (1215) est en outre configurée pour :

extraire un premier ensemble de plans d'une première trame de la pluralité de trames de données ;
extraire un second ensemble de plans d'une seconde trame de la pluralité de trames de données ;
identifier une hypothèse de transformation, où l'hypothèse de transformation représente le mouvement du capteur entre l'acquisition de la première et celle de la seconde trame ;
créer un plan transformé en appliquant l'hypothèse de transformation à un premier plan dans le premier ensemble de plans ; et
déterminer une valeur de divergence en appliquant une formule de divergence au plan transformé et à un second plan dans le second ensemble de plans, où la divergence détermine une distance statistique entre des représentations de distribution de probabilités du premier plan et du second plan, où les représentations de distribution de probabilités du premier plan et du second plan représentent des distributions de probabilités de points compris dans le premier plan et dans le second plan, les points étant **caractérisés par** des vecteurs normaux et une distance orthogonale, lesquels sont respectivement acquis à partir du premier plan extrait et du second plan extrait.

**9.** Dispositif selon la revendication 8, dans lequel l'unité de traitement (1215) est en outre configurée pour :

créer un ensemble de plans transformés en appliquant l'hypothèse de transformation à une pluralité de plans dans le premier ensemble de plans ; et
déterminer un ensemble de divergences en calculant la divergence entre l'ensemble de plans transformé et au moins un plan du second ensemble de plans.

Fig. 1

_200_

```
            ┌─────────────┐
            │    BEGIN     │
            └─────────────┘
                   │
                   ▼
┌─────────────────────────────────────────────────────────────┐
│   RECEIVING 3-D POINT CLOUD REPRESENTING OBJECTS IN A SCENE  │  _202_
└─────────────────────────────────────────────────────────────┘
                   │
                   ▼
┌─────────────────────────────────────────────────────────────┐
│  DIVIDING 3-D POINT CLOUD INTO A PLURALITY OF CELLS (OPTIONAL)│  _204_
└─────────────────────────────────────────────────────────────┘
                   │
                   ▼
┌─────────────────────────────────────────────────────────────┐
│   GENERATING A PLURALITY OF HYPOTHETICAL PLANES BASED ON THE │  _206_
│             POINTS IN THE 3-D POINT CLOUD                    │
└─────────────────────────────────────────────────────────────┘
                   │
                   ▼
┌─────────────────────────────────────────────────────────────┐
│       SELECTING FROM THE PLURALITY OF HYPOTHETICAL PLANES,   │
│  A HYPOTHETICAL PLANE WITH THE GREATEST NUMBER OF INLIERS    │  _208_
│     AS REPRESENTATIVE OF AN OBJECT PLANE IN THE SCENE        │
└─────────────────────────────────────────────────────────────┘
                   │
                   ▼
┌─────────────────────────────────────────────────────────────┐
│     REFINING THE SELECTED HYPOTHETICAL PLANE (OPTIONAL)      │  _210_
└─────────────────────────────────────────────────────────────┘
                   │
                   ▼
┌─────────────────────────────────────────────────────────────┐
│  CALCULATING PARAMETRIC DESCRIPTION OF THE SELECTED PLANE    │  _212_
└─────────────────────────────────────────────────────────────┘
                   │
                   ▼
            ┌─────────────┐
            │   FINISH     │
            └─────────────┘
```

# Fig. 2

300

RANDOMLY SELECTING AT LEAST THREE POINTS IN A CELL ⟶ 302

CALCULATING NORMAL VECTOR AND ORTHOGONAL DISTANCE BASED ON THE AT LEAST THREE POINTS ⟶ 304

DETERMINING INLIERS BASED ON THE POINT-TO-PLANE DISTANCE OF EACH POINT ⟶ 306

Fig. 3A

350

SELECTING A RANDOM POINT WITHIN A CELL — 352

↓

SELECTING ALL POINTS IN A SMALL NEIGHBORHOOD OF SELECTED POINT. INCLUDE THE SELECTED POINT IN THE SET. — 354

↓

ENOUGH POINTS WITHIN THE NEIGHBORHOOD ? — 356

NO → HYPOTHESIS NOT VALID — 362

YES

↓

ESTIMATING THE NORMAL VECTOR AND THE ORTHOGONAL DISTANCE FROM THE SELECTED POINTS — 358

↓

CHECKING PLANARITY OF THE SELECTED POINTS, IF THEY DO NOT FULFILL THE PLANE EQUATION, $|n'x - d| \leq t$, DISCARD THE HYPOTHESIS AND START AGAIN ( OPTIONAL ) — 360

↓

DETERMINING INLIERS BASED ON POINT-TO-PLANE DISTANCE OF EACH POINT — 364

# Fig. 3B

```
        ┌──────────────────────────────────────────────────────────────┐
        │  ESTIMATING THE NORMAL VECTOR n AND THE ORTHOGONAL             │──402
        │  DISTANCE d OF THE SELECTED PLANE BASED ON ITS INLIERS         │
        └──────────────────────────────────────────────────────────────┘
                                    │
                                    ▼
        ┌──────────────────────────────────────────────────────────────┐
        │  COMPUTING NEW INLIERS = ALL POINTS x WITHIN CELL SATISFYING   │──404
        │  | n'x - d | ≤ t                                              │
        └──────────────────────────────────────────────────────────────┘
```

400

Number of new inliers higher than before? — 406

NO

YES

MAX ITERATIONS REACHED ? — 408

NO

YES

END — 410

## Fig. 4

EP 2 573 734 B1

500

```
┌─────────────────────────────────────────────────────────────┐
│                                                             │──502
│         PERFORMING A RANSAC METHOD L ITERATIONS             │
│                                                             │
└─────────────────────────────────────────────────────────────┘
                              │
                              ▼
┌─────────────────────────────────────────────────────────────┐
│                                                             │──504
│  FROM L INLIERS SETS, SELECTING THE SET WITH MAXIMUM NUMBER OF INLIERS.  │
│                                                             │
└─────────────────────────────────────────────────────────────┘
                              │
                              ▼
┌─────────────────────────────────────────────────────────────┐
│        ESTIMATING THE NORMAL VECTOR n AND THE ORTHOGONAL     │──506
│        DISTANCE d FROM THE SELECTED SET OF INLIERS.          │
└─────────────────────────────────────────────────────────────┘
                              │
                              ▼
┌─────────────────────────────────────────────────────────────┐
│  COMPUTING NEW INLIERS AS THE SET OF ALL POINTS x WITHIN CELL SATISFYING | n'x - d | ≤ t  │──508
└─────────────────────────────────────────────────────────────┘
```

## Fig. 5A

$$550$$

RANDOMLY SELECTING A GIVEN FRACTION OF THE INLIERS SET OF THE SELECTED PLANE — *552*

ESTIMATING THE NORMAL VECTOR n AND THE ORTHOGONAL DISTANCE d FROM THE SELECTED FRACTION OF THE INLIERS SET — *554*

COMPUTING INLIERS AS THE SET OF ALL POINTS X WITHIN CELL SATISFYING $| n'x - d | \leq t$ — *556*

## Fig. 5B

*600*

| PLANE SET A | PLANE SET B |
|---|---|

APPLYING A
TRANSFORMATION TO
THE PLANES IN
PLANE SET A

*610*

CALCULATING THE DIVERGENCE BETWEEN THE
ALLOWABLE COMBINATIONS OF PLANES IN PLANE
SET B AND PLANES IN TRANSFORMED PLANE SET A

*620*

*640*

IDENTIFYING A
DIFFERENT
TRANSFORMATION

IDENTIFYING THE TRANSFORMATION THAT YIELDED
THE MINIMUM DIVERGENCE VALUES FOR
THE ALLOWABLE PLANE COMBINATIONS

*630*

IS
DIVERGENCE LESS
THAN OR EQUAL TO
THRESHOLD

*635*

STORING THE TRANSFORMATION AS A
TRANSFORMATION HYPOTHESIS

*650*

Fig. 6

Fig. 7

```
┌─────────────────────────────┐              ┌──────────────────┐              ┌──────────────────────────────────────────┐
│ LIST OF DETECTED PLANES     │─── 810       │ ENVELOPE POINT   │─── 815       │ LIST OF DETECTED PLANES                  │
│ PLANE 1  (AREA1)            │     ───▶     │ PREDICTION       │     ───▶     │ PLANE 1  (AREA1, PREDICTED_POINTS1)      │
│ PLANE 2  (AREA2)            │              │ ESTIMATOR        │              │ PLANE 2  (AREA2, PREDICTED_POINTS2)      │
│ ...                         │              │                  │              │ ...                                      │
│ PLANE N  (AREAN)            │              └──────────────────┘              │ PLANE N  (AREAN, PREDICTED_POINTS N)     │
└─────────────────────────────┘                                               └──────────────────────────────────────────┘
                                                                                                                   └── 820
```

DISCARDING ANY GIVEN PLANE (X),
WHERE ACTUAL POINTS
RECEIVED < MIN POINT CRITERIA — 831

DISCARDING ANY GIVEN PLANE (X),
WHERE PREDICTED POINTS/ACTUAL
POINTS RECEIVED => DISCARD CRITERIA — 832

SETTING ASIDE ANY GIVEN PLANE (X), — 833
WHERE PREDICTED POINTS/ACTUAL
POINTS RECEIVED => SET-ASIDE CRITERIA

825

FILTER ALGORITHM

LIST OF
SET-ASIDE
PLANES — 845

LIST OF
CANDIDATES
FOR MERGER — 840

800

# Fig. 8

Fig. 9

Fig. 10

EP 2 573 734 B1

*1100*

BEGIN

ESTIMATING AN AREA FOR EACH ENVELOPE FOR EACH PLANE
OF A PLURALITY OF PLANES EXTRACTED FROM IMAGE DATA
OF A REAL-WORLD SCENE COLLECTED BY A SENSOR

*1110*

ESTIMATING A NUMBER OF PREDICTED POINTS EXPECTED TO FORM EACH
PLANE BASED ON EACH PLAN'S AREA AND ORIENTATION AND BASED ON
RESOLUTION CHARACTERISTICS OF THE SENSOR

*1115*

GENERATING A LIST OF DETECTED PLANES THAT INCLUDES THE AREA
FOR EACH PLANE, AND THE NUMBER OF PREDICTED POINTS EXPECTED
TO FORM EACH ENVELOPE

*1120*

FILTERING THE LIST OF DETECTED PLANES TO PRODUCE A LIST OF
CANDIDATES FOR MERGER, WHERE FILTERING THE LIST OF DETECTED
PLANES DISCARDS ANY PLANE NOT SATISFYING AN ACTUAL POINTS
RECEIVED CRITERIA AND DISCARDS ANY PLANE NOT SATISFYING A
PRIMARY PREDICTED POINTS TO ACTUAL-POINTS RATIO CRITERIA

*1125*

APPLYING A PRIMARY MERGE ALGORITHM TO THE LIST OF
CANDIDATES FOR MERGER, WHEREIN THE PRIMARY MERGE
ALGORITHM ITERATIVELY PRODUCES A LIST OF MERGED PLANES BY
CALCULATING THE DIVERGENCE BETWEEN PLANES FORMING A
HYPOTHETICAL MERGED PLANE, WHEREIN THE HYPOTHETICAL
MERGED PLANES EACH COMPRISE A FIRST PLANE FROM THE LIST OF
MERGED PLANES AND A SECOND PLANE FROM THE LIST OF
CANDIDATES FOR MERGER

*1130*

OUTPUTTING A FINAL LIST OF PLANES BASED ON THE OUPUT
OF THE PRIMARY MERGE ALGORITHM

*1140*

FINISH

Fig. 11

*1205*

*1210*

*1212*

PROCESSING UNIT *1215*

MEMORY DEVICE *1220*

PLANE EXTRACTION INSTRUCTIONS *1226*

PLANE MERGING INSTRUCTIONS *1228*

PLANE MATCHING INSTRUCTIONS *1230*

PLANE STORAGE *1224*

FRAME POINT STORAGE *1222*

TRANSFORMATION STORAGE *1232*

TRANSFORMATION EVALUATION INSTRUCTIONS *1234*

*1200*

IMAGE PROCESSING DEVICE

Fig. 12

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12775865 B
- US 12436224 B
- US 12644559 B
- US 12846265 B